# EUROPÄISCHE PATENTSCHRIFT

(11) **EP 4 433 243 B1**
(45) Veröffentlichungstag und Bekanntmachung des Hinweises auf die Patenterteilung: **01.10.2025**
(21) Anmeldenummer: 22817064.3
(22) Anmeldetag: 16.11.2022
(51) Int. Cl.: B23D 47/04, B23D 21/00

(54) **ENDEN-BEARBEITUNGSZENTRUM FÜR STANGENFÖRMIGE WERKSTÜCKE**
END-PROCESSING CENTRE FOR ROD-SHAPED WORKPIECES
CENTRE D'USINAGE D'EXTRÉMITÉ POUR PIÈCES EN FORME DE BARRES

(30) Priorität: 16.11.2021 AT 509172021
(43) Veröffentlichungstag der Anmeldung: 25.09.2024
(73) Patentinhaber: ASMAG-Holding GmbH, 4645 Grünau im Almtal (AT)
(72) Erfinder: PIRZL, Simon, 4644 Scharnstein (AT); PÜHRINGER, Markus, 4644 Scharnstein (AT); RATHMAYR, Roland, 4644 Scharnstein (AT); KLINGER, Christoph Karl, 4644 Scharnstein (AT)
(74) Vertreter: Burger, Hannes
(86) Internationale Anmeldenummer: PCT/AT2022/060401
(87) Internationale Veröffentlichungsnummer: WO 2023/087043

(56) Entgegenhaltungen:
- EP-B1- 0 338 015
- WO-A1-2017/124601
- US-A- 4 425 062
- US-A1- 2002 028 642
- US-A1- 2013 260 652

## Beschreibung

Die Erfindung betrifft eine Anlage zum Bearbeiten der Enden von zumindest einem stangenförmigen oder rohrförmigen Werkstücks mittels zwei Bearbeitungsvorrichtungen, welche jeweils eine Sägevorrichtung und zumindest eine Anfasvorrichtung umfassen, wobei das zumindest eine stangenförmige oder rohrförmige Werkstück den Bearbeitungsvorrichtungen mittels einer Fördervorrichtung in einer Förderebene quer zur Förderrichtung ausgerichtet zugeführt wird. Die vorliegende Erfindung zeichnet sich durch eine hohe Bearbeitungsgenauigkeit der zu bearbeitenden stangenförmigen oder rohrförmigen Werkstücke und durch eine hohe Bearbeitungsgeschwindigkeit bei einer kontinuierlichen Bearbeitung einer Mehrzahl von stangenförmigen oder rohrförmigen Werkstücken aus.

Eine Vorrichtung gemäß dem Oberbegriff des Anspruchs 1 und ein Verfahren gemäß dem Oberbegriff des Anspruchs 13 zum Bearbeiten von stangenförmigen Werkstücken wird in der US4425062A beschrieben. Dort wird eine Stange über eine Zuführeinrichtung zwischen zwei Bearbeitungseinrichtungen eingelegt und dann in jeder Bearbeitungseinrichtung das Stangenende geschnitten und bearbeitet.

Weiters beschreibt EP0338015B1 ein Verfahren zum Schneiden und Entgraten von Rohren, wobei hierbei das Ausgangsrohr mittels Tragbacken für die Bearbeitung gehalten wird, um das Ausgangsrohr abzuschneiden und anschließend zu entgraten. Beide Vorrichtungen beschreiben jedoch hinsichtlich der erreichbaren Bearbeitungsgenauigkeit und besonders hinsichtlich der Bearbeitungsgeschwindigkeit bei einer kontinuierlichen Bearbeitung einer Mehrzahl von stangenförmigen oder rohrförmigen Werkstücken nur eine bedingt zufriedenstellende technische Lösung.

Aufgabe der vorliegenden Erfindung war es, die Nachteile des Standes der Technik zu überwinden und eine Vorrichtung und ein Verfahren zur Verfügung zu stellen, mittels derer ein Benutzer in der Lage ist, in einfacher Weise und mit hoher Fertigungsgenauigkeit bei gleichzeitig geringer Taktzeit die Enden von stangenförmigen bzw. rohrförmigen Werkstücke zu bearbeiten.

Diese Aufgabe wird durch eine Vorrichtung und ein Verfahren gemäß den Ansprüchen gelöst.

Die erfindungsgemäße Anlage zum Bearbeiten eines ersten Endes und eines zweiten Endes von zumindest einem stangenförmigen Werkstück umfasst eine Fördervorrichtung, in welcher das zumindest eine stangenförmige Werkstück in einer Förderebene quer zu einer Förderrichtung positionierbar ist und mittels welcher Fördervorrichtung das zumindest eine stangenförmige Werkstück in Förderrichtung förderbar ist. Des Weiteren umfasst die Anlage eine erste Bearbeitungsvorrichtung und eine zweite Bearbeitungsvorrichtung, wobei der ersten Bearbeitungsvorrichtung das erste Ende des zumindest einen stangenförmigen Werkstücks und der zweiten Bearbeitungsvorrichtung das zweite Ende des zumindest einen stangenförmigen Werkstücks mittels der Fördervorrichtung zuführbar ist. Dabei weisen die erste Bearbeitungsvorrichtung und die zweite Bearbeitungsvorrichtung jeweils eine Klemmvorrichtung, eine Sägevorrichtung und zumindest eine Anfasvorrichtung auf. Es kann vorteilhaft sein, dass die Sägevorrichtung und die zumindest eine Anfasvorrichtung einer Bearbeitungsvorrichtung zueinander derart ausgerichtet sind, dass die jeweiligen Bearbeitungsdrehachsen innerhalt einer gemeinsamen Ebene angeordnet sind.

Bei der ersten Bearbeitungsvorrichtung und bei der zweiten Bearbeitungsvorrichtung sind jeweils die Sägevorrichtung und ein Maschinengehäuse der zumindest einen Anfasvorrichtung auf einem gemeinsamen Tragelement angeordnet und gegenüber dem gemeinsamen Tragelement ortsfest gehaltert. Weiters ist bei der ersten Bearbeitungsvorrichtung und bei der zweiten Bearbeitungsvorrichtung jeweils eine Werkzeugeinheit aus der Sägevorrichtung, dem Maschinengehäuse mit der zumindest einen Anfasvorrichtung und dem gemeinsamen Tragelement gebildet. Dabei sind die erste Werkzeugeinheit der ersten Bearbeitungsvorrichtung gegenüber einem ersten Maschinengestell und die zweite Werkzeugeinheit der zweiten Bearbeitungsvorrichtung gegenüber einem zweiten Maschinengestell entlang einer normal zur Förderebene ausgerichteten ersten Bearbeitungsrichtung und entlang einer zur Förderrichtung orthogonal und zur Förderebene parallel ausgerichteten zweiten Bearbeitungsrichtung bewegbar.

Werden folglich die Enden des zumindest einen stangenförmigen Werkstücks den jeweiligen Bearbeitungsvorrichtungen zugeführt, so können diese Enden, bzw. die Endbereich der stangenförmigen Werkstücke in, von der Klemmvorrichtung gehaltenem Zustand mittels der Werkzeugeinheit bearbeitet werden. Vorteilhaft ist dabei, dass die Werkzeugeinheit in Richtung der ersten Bearbeitungsrichtung und in Richtung der zweiten Bearbeitungsrichtung bewegbar ist und somit mittels der Sägeeinheit das zumindest eine stangenförmige Werkstück abkappbar ist und mittels der Anfaseinheit bearbeitbar ist, wobei die Klemmvorrichtung zwischen den beiden Bearbeitungsschritten nicht gelöst wird. Dadurch ergibt sich eine möglichst einfache Bearbeitbarkeit und präzise Bearbeitung, da das zumindest eine stangenförmige Werkstück in jedem Fall lagerichtig mittels der Klemmvorrichtung positioniert ist und somit gleichzeitig eine Referenzmarke für die Bewegungen der Werkzeugeinheit darstellt. In weiterer Folge ergibt sich damit eine Einsparung an Messtechnik zur Justage des zumindest einen stangenförmigen Werkstücks.

Des Weiteren wird durch die gegenständlich beschriebene Anlage erreicht, dass bei einer Bearbeitung einer Vielzahl von stangenförmigen Werkstücken die Taktzeit pro Zuführung und Bearbeitung eines stangenförmigen Werkstücks erheblich verkürzt, sowie die Toleranz der Bearbeitung verbessert ist. Dies resultiert zum einem aus dem Umstand, dass das zu bearbeitende zumindest eine stangenförmige Werkstück für beide Arbeitsgänge lediglich einmal geklemmt werden muss. Zum zweiten wird die Taktzeit je zu bearbeitendem stangenförmigen Werkstück verringert, da durch die präzise Positionierung desgleichen mittels der Klemmvorrichtung in Bezug auf die Lagerichtigkeit zu den einzelnen Werkzeugen der Werkzeugeinheit kein zusätzlicher Messaufwand, der sich zeitlich zu Buche schlagen würde, anfällt.

Vorteilhaft ist auch eine Ausprägung, gemäß welcher vorgesehen sein kann, dass die Fördervorrichtung, die erste Bearbeitungsvorrichtung und die zweite Bearbeitungsvorrichtung auf einem gemeinsamen Grundgestell gehaltert sind, wobei eine Bearbeitungsdrehachse der zumindest einen Anfasvorrichtung der ersten Bearbeitungsvorrichtung mit einer Bearbeitungsdrehachse der zumindest einen Anfasvorrichtung der zweiten Bearbeitungsvorrichtung fluchtend ausgerichtet ist.

Zweckmäßig kann es sein, dass die jeweilige Klemmvorrichtung lagefixiert an der jeweiligen Bearbeitungsvorrichtung gehaltert ist, wobei gleichzeitig die erste und die zweite Bearbeitungsvorrichtung auf dem gemeinsamen Grundgestell gehaltert sein können. Somit wird die Lagerichtigkeit des zu bearbeitenden stangenförmigen Werkstücks, bzw. allgemein von zu bearbeitenden stangenförmigen Werkstücken sichergestellt. Durch die fluchtende Ausrichtung der Bearbeitungsdrehachsen der Anfasvorrichtungen der ersten und der zweiten Bearbeitungsvorrichtung ist in weiterer Folge gewährleistet, dass die Justierung der jeweiligen Anfasvorrichtung mittels der jeweiligen bewegbaren Werkzeugeinheit vereinfacht ist und eine rasche und präzise Bearbeitung mittels der jeweiligen Anfasvorrichtung erfolgt.

Insbesondere kann es vorteilhaft sein, wenn die Fördervorrichtung ein erstes Fördermittel und ein zweites Fördermittel umfasst, welches erste Fördermittel an dem ersten Maschinengestell der ersten Bearbeitungsvorrichtung und welches zweite Fördermittel an dem zweiten Maschinengestell der zweiten Bearbeitungsvorrichtung gehaltert ist, wobei das erste Fördermittel und das zweite Fördermittel bewegungsgekoppelt sind.

Die Zustellung in Förderrichtung des zumindest einen stangenförmigen Werkstücks kann somit in koordinierter Weise durch das erste Fördermittel und das zweite Fördermittel gewährleistet werden. Es ist somit vermeidbar, dass das zumindest eine stangenförmige Werkstück bei Aufnahme durch die jeweilige Klemmvorrichtung eine Schrägstellung bezüglich der fluchtenden Klemmvorrichtungen, bzw. in weiterer Folge bezüglich der fluchtenden Bearbeitungsdrehachsen aufweist und in und weiterer Folge durch die Klemmung in den Klemmvorrichtungen verspannt wird. Folglich ist gewährleistet, dass durch die Bewegungskopplung des ersten Fördermittels und des zweiten Fördermittels das zumindest eine stangenförmige Werkstück, bzw. stangenförmige Werkstücke in der Fördervorrichtung lagerichtig, also mit dessen Längsachse parallel zur ersten Bearbeitungsrichtung ausgerichtet, positioniert sind und dass das erste Ende und das zweite Ende des zumindest einen stangenförmigen Werkstücks gleichzeitig jeweils der ersten und der zweiten Bearbeitungsvorrichtungen zugeführt werden.

Erfindungsgemäß ist die jeweilige Klemmvorrichtung gegenüber dem ersten und zweiten Maschinengestell der jeweiligen ersten und zweiten Bearbeitungsvorrichtung entlang der ersten Bearbeitungsrichtung bewegbar und positionierbar, wobei ein erster Endbereich und ein zweiter Endbereich des zumindest einen stangenförmigen Werkstücks in der jeweiligen Klemmvorrichtung der ersten Bearbeitungsvorrichtung und der zweiten Bearbeitungsvorrichtung aufnehmbar bzw. positionierbar sind. Es kann vorteilhaft sein, dass die erste Bearbeitungsrichtung vertikal ausgerichtet ist und somit dass die jeweilige Klemmvorrichtung in vertikaler Richtung bewegbar und positionierbar ist.

Somit ist gewährleistet, dass ein geometrisch bekanntes stangenförmiges Werkstück derart von der Klemmvorrichtung aufgenommen und positioniert werden kann, dass die Bearbeitungspositionierung des stangenförmigen Werkstücks relativ zur Bearbeitungsvorrichtung bekannt ist. Dadurch ergibt sich der vorteilhafte Effekt, dass ein Einmessen, bzw. das Bestimmen der genauen Position in Richtung der ersten Bearbeitungsrichtung des stangenförmigen Werkstücks entfällt. Somit kann mittels der Werkzeugeinheit die Bearbeitung des zumindest einen stangenförmigen Werkstücks schneller begonnen werden, was wiederum die Taktzeit bei Bearbeitung einer Vielzahl von stangenförmigen Werkstücken verringert. Gleichermaßen muss die Positionierung eines stangenförmigen Werkstücks entlang dessen Längsachse nicht bestimmt und gegebenenfalls adaptiert werden, was die Bestimmung der Position des stangenförmigen Werkstücks in Richtung der ersten Bearbeitungsrichtung bei Falschausrichtung desselben messtechnisch erschweren würde. Eine Einsparung an entsprechender Messtechnik bringt weiters wirtschaftliche Vorteile und eine Reduktion der Anlagenkomplexität mit sich.

Gemäß einer Weiterbildung ist es möglich, dass die jeweilige Werkzeugeinheit der ersten Bearbeitungsvorrichtung und der zweiten Bearbeitungsvorrichtung neben der zumindest einen Anfasvorrichtung zumindest eine zweite Anfasvorrichtung mit einem zweiten Maschinengehäuse umfasst, wobei die Maschinengehäuse der zumindest einen Anfasvorrichtung und der zumindest einen zweiten Anfasvorrichtung am gemeinsamen Tragelement entlang der Förderrichtung zueinander beabstandet angeordnet sind.

Somit ist es möglich, dass das zumindest eine erste stangenförmige Werkstück und ein zweites stangenförmiges Werkstück gleichzeitig, bzw. in einem Bearbeitungsschritt und bei einmaligem Zustellen der Werkzeugeinheit mittels der zumindest einen ersten Anfasvorrichtung und der zweiten Anfasvorrichtung gleichzeitig bearbeitet werden. Dies bringt eine Verringerung der Taktzeit bei der Bearbeitung von mehreren stangenförmigen Werkstücken mit sich.

Darüber hinaus kann vorgesehen sein, dass die zumindest eine Anfasvorrichtung gegenüber dessen Maschinengehäuse und die zweite Anfasvorrichtung gegenüber dessen zweiten Maschinengehäuse in Richtung entlang der zweiten Bearbeitungsrichtung bewegungsgekoppelt bewegbar und bewegungsgekoppelt positionierbar sind.

Dadurch kann die Taktzeit bei einer Bearbeitung von mehreren stangenförmigen Werkstücken weiter verringert werden, da das Zustellen der Anfasvorrichtungen in Richtung der zweiten Bearbeitungsrichtung einerseits durch die Bewegung der Werkzeugeinheit und andererseits durch die Bewegung der Anfasvorrichtungen selbst erfolgt. Weiters sind in weiterer Folge auch geringer Wege der Werkzeugeinheit notwendig, was energetisch Vorteile hinsichtlich der bei jeder Bewegung zu beschleunigenden Masse mit sich bringt.

Insbesondere kann es vorteilhaft sein, wenn mittels der jeweiligen Sägevorrichtung der ersten Bearbeitungsvorrichtung und der zweiten Bearbeitungsvorrichtung bei einer Bewegung der Werkzeugeinheit entlang der ersten Bearbeitungsrichtung das erste Ende und das zweite Ende, bzw. der erste Endabschnitt und der zweite Endabschnitt des zumindest einen ersten stangenförmigen Werkstücks und eines zweiten stangenförmigen Werkstücks kappbar sind.

Entsprechend zweckmäßig ist es, wenn die Sägevorrichtung relativ zur Klemmvorrichtung derart angeordnet ist, dass einer auf die Förderebene projizierte Linie eines Sägeblatts oder eines Sägebands das zumindest eine stangenförmige Werkstück und das zweite stangenförmige Werkstück überdeckt. Somit können zumindest zwei stangenförmige Werkstücke gleichzeitig bei einer Bearbeitungsbewegung in Richtung der ersten Bearbeitungsrichtung gekappt werden. Wiederum ergeben sich durch diese Ausführungsform der Vorteil in der Verkürzung der Taktzeit pro bearbeitetem stangenförmigen Werkstück und einer Reduktion des energetischen Aufwandes auf Grund der Reduktion von Bearbeitungsschritten pro zwei zu bearbeitender stangenförmiger Werkstücke.

Gemäß einer Weiterbildung ist es möglich, dass die Klemmvorrichtung der ersten Bearbeitungsvorrichtung und die Klemmvorrichtung der zweiten Bearbeitungsvorrichtung jeweils eine, bezogen auf die Förderebene, untere Klemmbacke und eine obere Klemmbacke aufweist, wobei bei der unteren Klemmbacke zumindest eine im Querschnitt V-förmige Werkstückaufnahme für das zumindest eine stangenförmige Werkstück ausgebildet ist.

Dabei ist vorteilhaft, dass das zumindest eine stangenförmige Werkstück und insbesondere ein stangenförmiges Werkstück mit rundem Querschnitt in der V-förmigen Werkstückaufnahme bezogen auf die Förderrichtung definiert positionierbar ist. Die Relativpositionen der Klemmvorrichtung und somit der unteren und oberen Klemmbacken zur Werkzeugeinheit sind über die Anordnung am gemeinsamen Maschinengestell bekannt. In weiterer Folge ist somit bei einer Positionierung des stangenförmigen Werkstücks in der V-förmigen Werkstückaufnahme die Position des stangenförmigen Werkstücks zur Werkzeugeinheit bekannt. Somit kann die Bearbeitung des zumindest einen stangenförmigen Werkstücks effektiv und präzise erfolgen, da keine Messtechnik zur Bestimmung der Lagerichtigkeit des stangenförmigen Werkstücks notwendig ist.

Eine vorteilhafte Weiterbildung kann sein, dass die obere Klemmbacke im Bereich der V-förmigen Werkstückaufnahme eine im Querschnitt V-förmige Werkstückklemmung aufweist, wobei die Querschnittsgeometrie der V-förmigen Werkstückaufnahme und der V-förmigen Werkstückklemmung im Wesentlichen symmetrisch bezüglich der Förderebene oder symmetrisch bezüglich einer horizontalen Ebene ausgestaltet sind.

Vorteilhaft ist dabei, dass das stangenförmige Werkstück in Bezug auf dessen Lage präzise in der Klemmvorrichtung positioniert wird. Diese präzise Positionierung wird auch erreicht, falls der stangenförmige Werkstück entlang dessen Längsachse von einer Geraden abweicht, da mittels der V-förmigen Werkstückklemmung der Endbereich des stangenförmigen Werkstücks in der V-förmigen Werkstückaufnahme dennoch lagerichtig positionierbar und klemmbar bzw. haltbar ist.

Gemäß einer Ausprägung ist es möglich, dass die obere Klemmbacke zur unteren Klemmbacke zumindest teilweise formkomplementär ausgebildet ist, wobei die obere Klemmbacke im Bereich der V-förmigen Werkstückaufnahme eine im Querschnitt konvexe oder V-förmige Andruckfläche aufweist.

Somit ist die Anlage für eine Vielzahl von stangenförmigen Werkstücken, die unterschiedliche Durchmesser aufweisen kompatibel. Weist ein stangenförmiges Werkstück beispielsweise einen Durchmesser größer als die Vertiefung der V-förmigen Werkzeugaufnahme in Richtung der ersten Bewegungsrichtung auf, so ist das stangenförmige Werkstück ohnedies mittels der oberen Klemmbacke haltbar. Weist ein stangenförmiges Werkstück beispielsweise einen Durchmesser kleiner als die Vertiefung der V-förmigen Werkzeugaufnahme in Richtung der ersten Bewegungsrichtung auf, so ist das stangenförmige Werkstück dennoch mittels der V-förmigen oder konvexen Andruckfläche haltbar. Gleichzeitig entsteht durch diese Ausgestaltung der Klemmbacken insbesondere bei runden Werkstücken der Vorteil, dass das runde Werkstück mittels drei Berührungspunkten und somit in statisch bestimmter Weise von den Klemmbacken gehalten wird.

Somit ist in weiterer Folge bei stangenförmigen Werkstücken mit unterschiedlichen Durchmessern kein Wechsel von einzelnen Komponenten der Anlage, wie beispielsweise der Klemmbacken notwendig. Weiters ist kein erneutes Einmessen der unterschiedlichen stangenförmigen Werkstücke notwendig. Es reicht eine einmalige Hinterlegung der Geometrie des zu bearbeitenden stangenförmigen Werkstücks aus, um in weiterer Folge die Bearbeitung desgleichen in effektiver und präziser Weise durchführen zu können. Da die Rüstzeit bei Kleinserien einen erheblichen Kostenfaktor mit sich bringt, ergeben sich so weitere wirtschaftliche Vorteile durch die erfindungsgemäße Ausgestaltung der Anlage.

Ferner kann es zweckmäßig sein, wenn die jeweilige Werkstückaufnahme bezüglich einer vertikalen Symmetrieebene symmetrisch ausgebildet ist, wobei jeder Werkstückaufnahme der Anlage eine Anfasvorrichtung zugeordnet ist und wobei die Bearbeitungsdrehachse der zugeordneten Anfasvorrichtung in der vertikalen Symmetrieebene der jeweiligen Werkstückaufnahme liegt.

Somit ergibt sich eine präzise Positionierung von stangenförmigen Werkstücken unabhängig von deren Durchmesser. Weiters entfällt eine Hinterlegung von Geometriewerten der stangenförmigen Werkstücke und zugehörigen Positionierungswerten der Klemmvorrichtungen und der Werkzeugeinheiten, da die Bearbeitungsdrehachsen der Anfasvorrichtungen mit der jeweiligen Längsachse des stangenförmigen Werkstücks in jedem Fall fluchtend ausgerichtet sind. Damit die die Komplexität der Steuerung der Anlage verringert und eine präzise Bearbeitung der stangenförmigen Werkstücke weiterhin gewährleistet bzw. verbessert. Insbesondere bei stangenförmigen Werkstücken mit geringem Durchmesser ist das Aufbringen einer präzise gefertigten Fase ohne messtechnische Hilfseinrichtungen schwierig zu bewerkstelligen. Durch die gegenständliche Ausprägung ist dahingehend die Qualität der aufgebrachten Fase bei stangenförmigen Werkstücken mit kleinem Durchmesse im Hinblick auf geringe Abweichungstoleranzen verbessert.

Ferner kann vorgesehen sein, dass die Klemmvorrichtung der ersten Bearbeitungsvorrichtung und die Klemmvorrichtung der zweiten Bearbeitungsvorrichtung und insbesondere die jeweilige untere Klemmbacke und die jeweilige obere Klemmbacke gegenüber dem ersten und zweiten Maschinengestell in Richtung entlang der ersten Bearbeitungsrichtung bewegungsgekoppelt bewegbar und bewegungsgekoppelt positionierbar sind.

Dadurch ist das zumindest eine stangenförmige Werkstück von der Fördervorrichtung aufnehmbar, welches gleichermaßen durch die V-förmige Aufnahme in Förderrichtung lagerichtig positioniert ist und in Normalrichtung zur Förderrichtung durch die Einstellbarkeit über die Höhenverstellung in einer zur Bearbeitungseinheit korrespondierenden Lage positioniert ist. Auch ist durch die Bewegungskopplung gewährleistet, dass das stangenförmige Werkstück an beiden Bearbeitungsvorrichtungen und somit beim ersten Endabschnitt und beim zweiten Endabschnitt gleichzeitig aufnehmbar ist, um Verbiegungen oder Verspannungen des stangenförmigen Werkstücks zu verhindern oder zumindest zu verringern.

Ferner kann es zweckmäßig sein, dass die jeweilige Klemmvorrichtung gegenüber dem Maschinengestell der jeweiligen Bearbeitungsvorrichtung in Richtung entlang der ersten Bearbeitungsrichtung bewegbar und positionierbar ist, wobei der jeweilige erste Endbereich und der jeweilige zweite Endbereich, bzw. der erste und der zweite Endabschnitt des zumindest einen stangenförmigen Werkstücks und eines zweiten stangenförmigen Werkstücks in der jeweiligen Klemmvorrichtung der ersten Bearbeitungsvorrichtung und der zweiten Bearbeitungsvorrichtung gleichzeitig aufnehmbar bzw. positionierbar sind. Dies bring eine weitere Verringerung der notwendigen Bewegungen der Komponenten der Anlage und in weiterer Folge eine weitere Erhöhung der Taktfrequenz mit sich. Diese Vorteile werden besonders durch hohe Stückzahlen der stangenförmigen Werkstücke verstärkt.

Des Weiteren kann es zweckmäßig sein, dass die Fördervorrichtung zumindest zwei Transportorgane aufweist, welche zumindest zwei Transportorgane jeweils zwei oder mehr im Querschnitt wannenförmige Transportaufnahmen aufweisen, wobei die wannenförmigen Transportaufnahmen in Förderrichtung aneinandergereiht sind und wobei das zumindest eine stangenförmigen Werkstücke in jeweils einer wannenförmigen Transportaufnahme jedes Transportorgans in Förderrichtung frei beweglich positionierbar ist.

Entsprechend einer zweckmäßigen Weiterbildung kann vorgesehen sein, dass das erste und das zweite Fördermittel jeweils zwei oder mehr im Querschnitt wannenförmige Transportaufnahmen aufweisen, wobei die wannenförmigen Transportaufnahmen in Förderrichtung aneinandergereiht sind und wobei das zumindest eine stangenförmige Werkstück in jeweils einer wannenförmigen Transportaufnahme des ersten und des zweiten Fördermittels in Förderrichtung frei beweglich positionierbar ist.

Das zumindest eine stangenförmige Werkstück ist somit bei Zuführung des gleichen zu der ersten und der zweiten Bearbeitungsvorrichtung in den wannenförmigen Transportaufnahmen in Förderrichtung frei beweglich, sodass bei der Aufnahme des zumindest einen stangenförmigen Werkstücks mittels der jeweiligen Klemmvorrichtung, bzw. mittels der jeweiligen zumindest einen unteren Klemmbacke der ersten und der zweiten Bearbeitungsvorrichtung das zumindest eine stangenförmige Werkstück in den V-förmigen Werkstückaufnahmen verspannungsfrei positionierbar ist. In weiterer Folge hat somit die Fördervorrichtung in Förderrichtung einen Spielraum für geringe Ungenauigkeiten bei der Zuführung von stangenförmigen Werkstücken zu der ersten und der zweiten Bearbeitungsvorrichtung, was aufwendige Mess- und Regeltechnik einspart, wobei gleichzeitig die hohe Güte der Fertigungsgenauigkeit der Fasen an den stangenförmigen Werkstücken erhalten bleibt.

Die Erfindung betrifft des Weiteren ein Bearbeitungsverfahren zum gleichzeitigen Bearbeiten eines ersten Endes und eines zweiten Endes von zumindest einem stangenförmigen Werkstück mittels einer Anlage umfassend eine Fördervorrichtung, eine erste Bearbeitungsvorrichtung und eine zweite Bearbeitungsvorrichtung. Dabei weisen die erste Bearbeitungsvorrichtung und die zweite Bearbeitungsvorrichtung jeweils eine Klemmvorrichtung und eine Werkzeugeinheit auf, welche Werkzeugeinheiten jeweils zumindest eine Anfasvorrichtung in einem Maschinengehäuse und eine Sägevorrichtung aufweisen.

Das Bearbeitungsverfahren umfassend die Schritte:
- Positionieren des zumindest einen stangenförmigen Werkstücks in einer Förderebene der Fördervorrichtung quer zu einer Förderrichtung. Somit kann das zumindest eine stangenförmige Werkstück, bzw. können stangenförmige Werkstücke mit deren Längsachse quer zur Förderrichtung ausgerichtet befördert werden;
- gleichzeitiges Zuführen eines ersten Endes des zumindest einen stangenförmigen Werkstücks zu der ersten Bearbeitungsvorrichtung und eines zweiten Endes des zumindest einen stangenförmigen Werkstücks zu der zweiten Bearbeitungsvorrichtung mittels der Fördervorrichtung;
- Positionieren eines ersten Endbereichs und eines zweiten Endbereichs des zumindest einen stangenförmigen Werkstücks in der jeweiligen Klemmvorrichtung der ersten Bearbeitungsvorrichtung und der zweiten Bearbeitungsvorrichtung. Die Positionierung des ersten Endbereichs und des zweiten Endbereichs, bzw. des ersten Endabschnitts und des zweiten Endabschnitts kann beispielsweise durch eine gleichzeitige Aufnahme des zumindest einen stangenförmigen Werkstücks mittels der Klemmvorrichtung von der Fördervorrichtung erfolgen. Die Aufnahme kann mittels einer Bewegung der Klemmvorrichtung in Richtung entlang einer Normalen auf die Förderebene erfolgen;
- Halten des ersten und des zweiten Endbereichs, bzw. des ersten und des zweiten Endabschnitts des zumindest eines stangenförmigen Werkstücks jeweils mittels einer unteren Klemmbacke und einer oberen Klemmbacke der jeweiligen Klemmvorrichtung, wobei das zumindest eine stangenförmige Werkstück in der Klemmvorrichtung zwischen der unteren und der oberen Klemmbacke positioniert ist. Beispielsweise kann die untere Klemmbacke oder die obere Klemmbacke in Richtung entlang einer Normalen auf die Förderebene bewegt werden um das zumindest eine stangenförmige Werkstück zwischen der unteren und der oberen Klemmbacke zu halten;
- Abkappen eines ersten Endabschnitts und eines zweiten Endabschnitts, bzw. eines ersten Endes und eines zweiten Endes des zumindest einen stangenförmigen Werkstücks mittels der jeweiligen Sägevorrichtung der ersten Bearbeitungsvorrichtung und der zweiten Bearbeitungsvorrichtung. Vorzugsweise können der ersten Endbereich und der zweite Endbereich gleichzeitig von den Sägevorrichtungen der ersten und der zweiten Bearbeitungsvorrichtung abgekappt werden;
- spanabhebendes Bearbeiten zum Aufbringen von zumindest einer Fase am ersten Ende und am zweiten Ende des zumindest eines stangenförmigen Werkstücks jeweils mittels der zumindest einen Anfasvorrichtung der ersten Bearbeitungsvorrichtung und der zweiten Bearbeitungsvorrichtung. Das Anfasen, bzw. das Aufbringen einer Fase an dem ersten Ende und an dem zweiten Ende des zumindest einen stangenförmigen Werkstück kann vorzugsweise durch Zustellen der jeweiligen Anfasvorrichtung der ersten und der zweiten Bearbeitungsvorrichtung in Richtung entlang der Längsachse des zumindest eine stangenförmigen Werkstücks, bzw. in Richtung quer zur Förderrichtung durchgeführt werden;

Das Bearbeitungsverfahren zeichnet sich weiters dadurch aus, dass
- die Sägevorrichtung und das Maschinengehäuse der zumindest einen Anfasvorrichtung als eine bewegungsgekoppelte Werkzeugeinheit bewegt werden. Somit werden bei Bewegung der jeweiligen Werkzeugeinheit der ersten und der zweiten Bearbeitungsvorrichtung entlang einer normal zur Förderebene ausgerichteten ersten Bearbeitungsrichtung mittels der jeweiligen in Betrieb befindlichen Sägeeinheiten der erste Endabschnitt und der zweite Endabschnitt des zumindest einen stangenförmigen Werkstücks gekappt. Weiters werden jeweils die zumindest eine Fase am ersten Ende und am zweiten Ende des zumindest einen stangenförmigen Werkstücks mittels der jeweiligen in Betrieb befindlichen Anfasvorrichtungen bei Bewegung der jeweiligen Werkzeugeinheit entlang einer zur Förderrichtung orthogonal und zur Förderebene parallel ausgerichteten zweiten Bearbeitungsrichtung aufgebracht wird.

Bei gegenständlichem Bearbeitungsverfahren ist von Vorteil, dass bei der Bearbeitung des zumindest einen stangenförmigen Werkstücks, bzw. von stangenförmigen Werkstücken zwei aufeinanderfolgende Bearbeitungsschritte durchgeführt werden, wohingegen das jeweilige zumindest eine stangenförmige Werkstück, bzw. die stangenförmigen Werkstücke für beide Bearbeitungsschritte nur ein Mal geklemmt, bzw. von der Klemmvorrichtung gehalten wird. Des Weiteren ist vorteilhaft, dass die Bearbeitungen mittels Bewegungen von einer Werkzeugeinheit bei der ersten und der zweiten Bearbeitungsvorrichtung durchgeführt werden. Dadurch entfallen umfangreiche Messanforderungen zur Einhaltung aller Toleranzen bei der Bearbeitung der stangenförmigen Werkstücke, da die Werkzeugeinheit in jedem Augenblick eine definierte und relativ zur Klemmvorrichtung, bzw. in weiterer Folge zum stangenförmigen Werkstück Positionierung aufweist. Daraus resultiert eine signifikante Verringerung der Taktzeit pro zu bearbeitende stangenförmige Werkstücke bei gleichzeitig höherer Fertigungsgenauigkeit gegenüber bekannten Anlage aus dem Stand der Technik.

Des Weiteren kann es zweckmäßig sein, dass der jeweilige erste Endabschnitt und der jeweilige zweite Endabschnitt von zwei stangenförmigen Werkstücken mittels der jeweiligen Sägevorrichtung gleichzeitig gekappt werden. Dies bring eine weitere Verringerung der Taktzeit je stangenförmigen Werkstück, bzw. eine erhöhte Taktfrequenz mit sich. Gleichermaßen resultiert diese Ausprägung in einem geringeren Energieaufwand je zu bearbeitendem stangenförmigen Werkstück durch die Reduzierung der Bewegungsabläufe gegenüber einer Sägeeinheit, die jeweils nur ein stangenförmiges Werkstück kappt.

Vorteilhaft ist auch eine Ausprägung, gemäß welcher vorgesehen sein kann, dass die erste Bearbeitungsvorrichtung und die zweite Bearbeitungsvorrichtung jeweils zwei Anfasvorrichtungen aufweisen, welche zwei Anfasvorrichtungen entlang der Förderrichtung beabstandet angeordnet sind, wobei das jeweilige erste Ende und das jeweilige zweite Ende von zwei stangenförmigen Werkstücken mittels der jeweils zwei Anfasvorrichtungen gleichzeitig spanabhebend bearbeitet wird. Vorteilhaft ist dabei, dass wiederum die Taktzeit je zu bearbeitendem stangenförmigem Werkstück verringert wird. Wiederum arbeitet die Anlage energetisch effektiver, da einzelne Bewegungsabläufe durch die gleichzeitige Zustellung von zwei Anfasvorrichtungen pro zu bearbeitendem stangenförmigem Werkstück verringert werden.

Zum besseren Verständnis der Erfindung wird diese anhand der nachfolgenden Figuren näher erläutert.

Es zeigen jeweils in vereinfachter, schematischer und beispielhafter Darstellung:
- Fig. 1: eine mögliche Ausgestaltungsform der Anlage zur Endenbearbeitung von stangenförmigen oder rohrförmigen Werkstücken;
- Fig. 2: eine mögliche Ausgestaltungsform einer Bearbeitungsvorrichtung;
- Fig. 3: die untere Klemmbacke und die obere Klemmbacke der Klemmvorrichtung im Querschnitt;
- Fig. 4: den ersten Endbereich, bzw. den zweiten Endbereich eines stangenförmigen Werkstücks;
- Fig. 5: eine erste Anfasvorrichtung und eine zweite Anfasvorrichtung auf deren gemeinsamen Tragelement einer Werkzeugeinheit;
- Fig. 6: eine Anordnung der Sägevorrichtung, der zumindest einen ersten Anfasvorrichtung und der zweiten Anfasvorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Weiters sei festgehalten, dass entsprechend der Bezugszeichenliste Begriffe aus der Bezugszeichenliste mit und/oder ohne bestimmten Index in der Beschreibung der Offenbarung verwendet werden. Sofern eine genaue Differenzierung der Be-griffe hinsichtlich deren spezifischer Ausgestaltungsform oder Positionierung nicht notwendig ist, werden keine Indizes verwendet. Im Umkehrschluss wird beispielsweise eine Anfasvorrichtung 12a von einer Anfasvorrichtung 12b entsprechend der jeweiligen Beschreibung differenziert, wobei beides weiterhin Anfasvorrichtungen 12 sind.

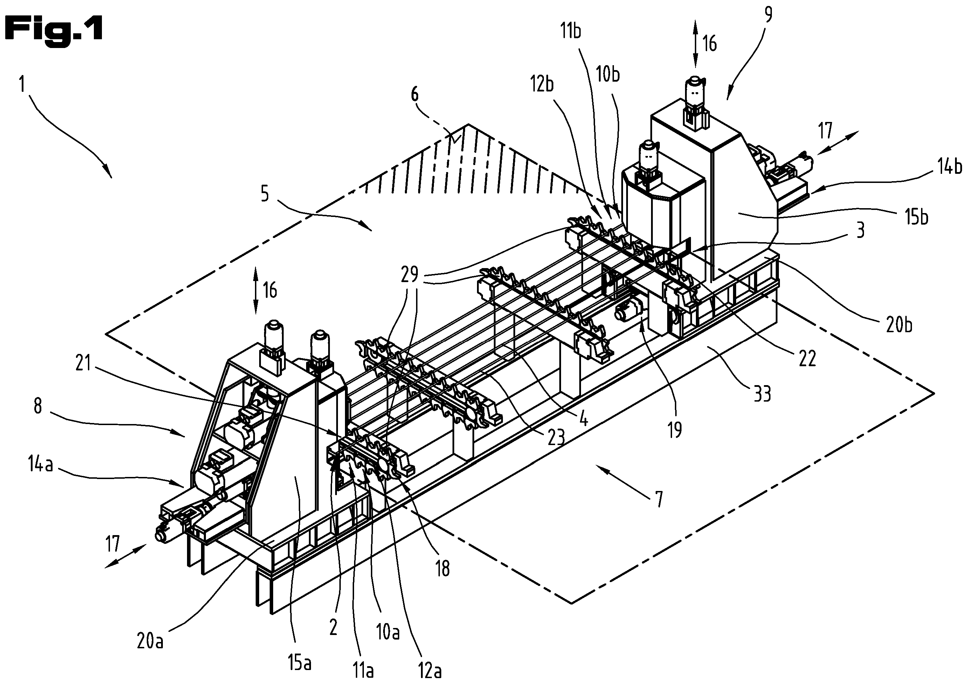

In der Fig. 1 ist eine gegebenenfalls für sich eigenständige Ausgestaltungsform der Anlage 1 zur Endenbearbeitung von stangenförmigen oder rohrförmigen Werkstücken gezeigt. Insbesondere dient die Anlage 1 zur Bearbeitung eines ersten Endes 2 und eines zweiten Endes 3 von zumindest einem stangenförmigen Werkstück 4, wobei die Bearbeitung der beiden Enden 2, 3 an den dafür vorgesehenen ersten Bearbeitungsvorrichtung 8 und zweiten Bearbeitungsvorrichtung 9 gleichzeitig für das zumindest eine stangenförmige Werkstück 4 durchgeführt werden kann. Die Anlage 1 umfasst eine Fördervorrichtung 5 in welcher das zumindest eine stangenförmige Werkstück 4 in einer Förderebene 6 quer zur Förderrichtung 7 positionierbar ist. Das stangenförmige Werkstück 4 kann vorzugsweise so ausgerichtet sein, dass das erste Ende 2 und das zweite Ende 3 gleichzeitig der jeweiligen Bearbeitungsvorrichtungen 8, 9 mittels der Fördervorrichtung 5 zugeführt wird, sodass das zumindest eine stangenförmige Werkstück 4 für die darauffolgende Bearbeitung lagerichtig positioniert ist.

Die Fördervorrichtung 5 kann mehrere Transportorgane 35 umfassen um besonders bei stangenförmigen Werkstücken 4 mit einer Längenabmessung, die das Vielfache des mittleren Durchmessers eines Werkstücks beträgt, die stangenförmigen Werkstücke 4 zu stützen, um deren Durchbiegung auf Grund des eigenen Schwergewichts zu begrenzen. Damit kann weiters sichergestellt werden, dass die Enden 2, 3, bzw. ein erster Endbereich 21 und ein zweiter Endbereich 22 des zumindest einen stangenförmigen Werkstücks 4 lagerichtig, also nach Möglichkeit entlang deren Längsachse durchbiegungsfrei und mit deren Längsachse innerhalb der Förderebene 6 der ersten Bearbeitungsvorrichtung 8 und der zweiten Bearbeitungsvorrichtung 9 zugeführt werden.

Weiters umfasst die erste Bearbeitungsvorrichtung 8 ein erstes Fördermittel 18 und die zweite Bearbeitungsvorrichtung 9 ein zweites Fördermittel 19, welches erste Fördermittel 18 an einem ersten Maschinengestell 20a und welches zweite Fördermittel 19 an einem zweiten Maschinengestell 20b der Bearbeitungsvorrichtungen 8, 9 angeordnet und bewegungsgekoppelt sind, bzw. gleichbeweglich angesteuert werden können. Mittels der Fördermittel 18, 19 kann sichergestellt werden, dass die Zuführung des zumindest einen stangenförmigen Werkstücks 4, bzw. die Zuführung von stangenförmigen Werkstücken lagerichtig in Richtung der Förderrichtung 7 sichergestellt ist. Die lagerichtige Zuführung der stangenförmigen Werkstücke in Richtung der Förderrichtung 7 ist insbesondere wichtig, da die Bearbeitungsvorrichtungen 8, 9 jeweils Maschinen zur präzisen Bearbeitung der Endbereiche, bzw. der Enden der stangenförmigen Werkstücke umfassen.

Um das zumindest eine stangenförmige Werkstück 4 in effektiver Weise und präzise bearbeiten zu können umfassen die erste Bearbeitungsvorrichtung 8 und die zweite Bearbeitungsvorrichtung 9 jeweils eine Klemmvorrichtung 10, eine Sägevorrichtung 11 und zumindest eine Anfasvorrichtung 12, welche Anfasvorrichtung 12 in einem Maschinengehäuse 13 angeordnet ist. Dabei sind die Sägevorrichtung 11 und das Maschinengehäuse 13 relativ zueinander starr bewegungsgekoppelt auf einem gemeinsamen Tragelement 14 angeordnet und bilden somit mit dem gemeinsamen Tragelement 14 eine Werkzeugeinheit 15 je Bearbeitungseinheit 8, bzw. 9. Die Werkzeugeinheit 15a der ersten Bearbeitungsvorrichtung 8 und die Werkzeugeinheit 15b der zweiten Bearbeitungsvorrichtung 9 sind jeweils gegenüber einem jeweiligen ersten und zweiten Maschinengestell 20a, 20b entlang einer normal zur Förderebene 6 ausgerichteten ersten Bearbeitungsrichtung 16 und entlang einer zur Förderrichtung 7 orthogonalen und zur Förderebene 6 parallel ausgerichteten zweiten Bearbeitungsrichtung 17 bewegbar.

Weiters umfassen die Bearbeitungsvorrichtungen 8, 9 jeweils eine Klemmvorrichtung 10 mittels derer das zumindest eine stangenförmige Werkstück 4 positionierbar und haltbar ist. Beispielhaft ist es möglich, dass zumindest eine stangenförmige Werkstück 4 oder zwei stangenförmige Werkstücke 4, 23 oder mehrere stangenförmige Werkstücke mittels der Fördervorrichtung 5 den Bearbeitungsvorrichtungen 8, 9 derart zugeführt werden, dass die jeweiligen Endbereiche in den Klemmvorrichtungen 10a, 10b positioniert werden. Sodann werden die jeweiligen Endbereiche mittels der Klemmvorrichtungen 10a, 10b gehalten, um die Endbereiche, bzw. die Enden der stangenförmigen Werkstücke bearbeiten zu können.

Die Bearbeitung des zumindest einen stangenförmigen Werkstücks 4, bzw. der stangenförmigen Werkstücke erfolgt mittels der jeweiligen Sägevorrichtung 11 und der Anfasvorrichtung 12 der Bearbeitungsvorrichtungen 8, 9. Dabei werden zuerst die Enden des stangenförmigen Werkstücks 4, bzw. der stangenförmigen Werkstücke durch die in Betrieb befindliche Sägevorrichtung 11 beim Zustellen der Werkzeugeinheit 15 in Richtung entlang der ersten Bearbeitungsrichtung 16 gekappt. Es besteht also die Möglichkeit, dass neben dem Kappen von einem stangenförmigen Werkstück 4 auch mehrere stangenförmige Werkstücke in diesem einen Bearbeitungsschritt gekappt werden. Um dies zu gewährleisten ist die Sägevorrichtung 11 in Abstimmung mit der Klemmvorrichtung 10 jeweils derartig angeordnet, dass die Schnittbreite der Sägevorrichtung 11 die zu kappenden stangenförmigen Werkstücke, bzw. deren Endbereiche überdeckt. Bei einer Mehrzahl an gleichzeitig zu schneidenden Werkstücken ist denkbar, dass ein Sägeblatt 36 mit entsprechend großem Durchmesser oder ein Bandsägeblatt verwendet werden kann. Gleichzeitig kann beachtet werden, dass der Durchmesser des Sägeblatts 36 der Sägevorrichtung 11 in Kombination mit der Anordnung der Sägevorrichtung 11 auf dem gemeinsamen Tragelement 14 und der Klemmvorrichtung 10 derart gewählt ist, dass eine Kollision der Sägevorrichtung 11 mit der Klemmvorrichtung 10 bei Bewegung der Werkzeugeinheit 15 entlang der ersten Bewegungsrichtung 16 vermieden wird.

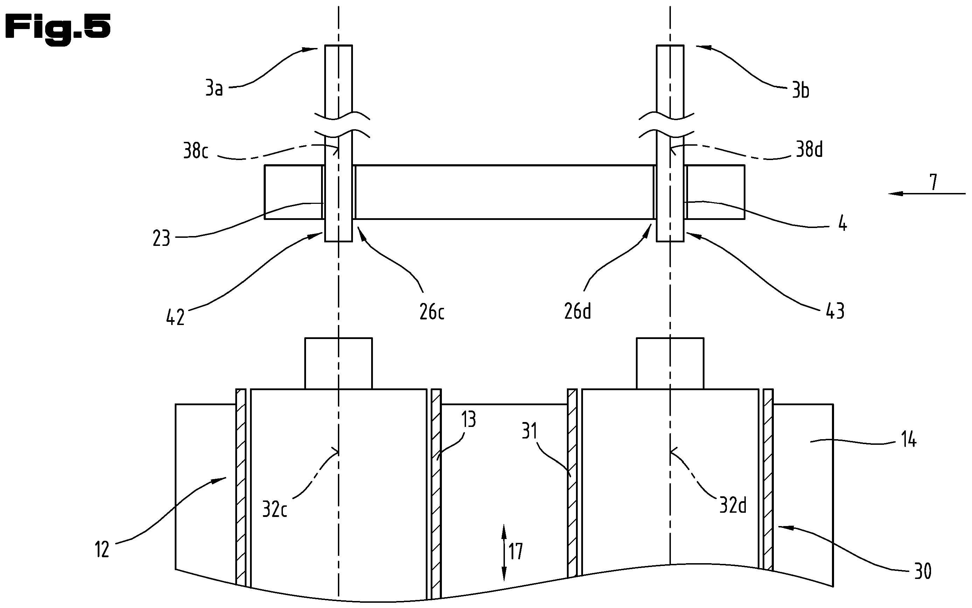

In einem zweiten Bearbeitungsschritt wird auf das gekappte stangenförmige Werkstück 4 mittels der in Betrieb befindlichen Anfasvorrichtung 12 bei Bewegung der Werkzeugeinheit 15 in Richtung entlang der zweiten Bearbeitungsrichtung 17 spanabhebend eine Fase 34 (siehe Fig. 5a, Fig. 5b) aufgebracht.

Die erste Bearbeitungsvorrichtung 8 und die zweite Bearbeitungsvorrichtung 9 sind mittels dem jeweiligen ersten und zweiten Maschinengestell 20a, 20b ortsfest auf einem gemeinsamen Grundgestell 33 gehaltert. Des Weiteren können die Transportorgane 35 auf dem gemeinsamen Grundgestell 33 gehaltert sein. Durch die Halterung der Bearbeitungsvorrichtungen 8, 9 ist eine fixierte Positionierung zueinander gegeben wodurch die stangenförmigen Werkstücke auf deren bestimmungsgemäße Länge gekappt werden können. Es ist folglich möglich, dass die stangenförmigen Werkstücke ohne zusätzliche Messtechnik entsprechend einem bestimmungsgemäßen Längenwert, resultierend aus der Positionierung der Bearbeitungsvorrichtungen 8, 9 zueinander abgelängt, bzw. deren Endbereiche gekappt werden können. Gleichzeitig kann die bestimmungsgemäße Länge der stangenförmigen Werkstücke durch die Bewegbarkeit der jeweiligen Werkzeugeinheit 15a, 15b der Bearbeitungsvorrichtungen 8, 9 entlang der zweiten Bewegungsrichtung 17 geringfügig beeinflusst, bzw. geändert werden. Weiters ist vorgesehen, dass eine Bearbeitungsdrehachse 32a der zumindest einen Anfasvorrichtung 12a mit einer Bearbeitungsdrehachse 32b der zumindest einen Anfasvorrichtung 12b durch die Anordnung der beiden Bearbeitungsvorrichtungen 8, 9 zueinander auf dem gemeinsamen Grundgestell 33 fluchtend ausgerichtet sind.

Weiters ist vorgesehen, dass die Fördervorrichtung 5, bzw. das erste Fördermittel 18, das zweite Fördermittel 19 und möglicherweise die Transportorgane 35 wannenförmige Transportaufnahmen 29 aufweisen. Diese wannenförmigen Transportaufnahmen 29 sind zur Aufnahme von stangenförmigen Werkstücken 4, 23 vorgesehene, wobei vorzugsweise zumindest sechs stangenförmige Werkstücke mittels der wannenförmigen Transportaufnahmen 29 von der Fördervorrichtung 5 gleichzeitig aufgenommen und in Förderrichtung 7 transportiert werden können. Es ist vorgesehen, dass jeweils ein einziges stangenförmiges Werkstück 4 in den wannenförmigen Transportaufnahmen 29, welche quer zur Förderrichtung 5 fluchtend zueinander angeordnet sind, aufgenommen werden kann. Es besteht die Möglichkeit, dass neben dem ersten Fördermittel 18 und dem zweiten Fördermittel 19 auch die Transportorgane 35 bewegungsgekoppelt sind, oder dass die Fördermittel 18 und die Transportorgane 35 in deren Bewegung koordiniert angesteuert sind, sodass die stangenförmigen Werkstücke entsprechend deren Längsachse lagerichtig den Bearbeitungsvorrichtungen 8, 9 zugeführt werden können.

Weites sind die stangenförmigen Werkstücke 4, 23 in den wannenförmigen Transportaufnahmen 29 in Förderrichtung 7 beweglich positioniert, bzw. haben die stangenförmigen Werkstücke 4, 23 in den wannenförmigen Transportaufnahmen 29 in Richtung entlang der Förderrichtung 7 zumindest einen Bewegungsspielraum von einer Länge von bis zu zwei mittleren Durchmessern eines stangenförmigen Werkstücks 4, bzw. sind die stangenförmigen Werkstücke 4, 23 nicht in den wannenförmigen Transportaufnahmen 29 in Richtung der Förderrichtung 7 fixiert, bzw. gehalten. Somit ist es möglich, dass mittels der jeweiligen Klemmvorrichtungen 10a, 10b der Bearbeitungsvorrichtungen 8, 9 die präzise Positionierung der zu bearbeitenden stangenförmigen Werkstücke relativ zur jeweiligen Bearbeitungsvorrichtung 8, 9 verspannungsfrei möglich ist, da die stangenförmigen Werkstücke in den wannenförmigen Transportaufnahmen 29 in Richtung entlang der Förderrichtung 7 beweglich positioniert sind.

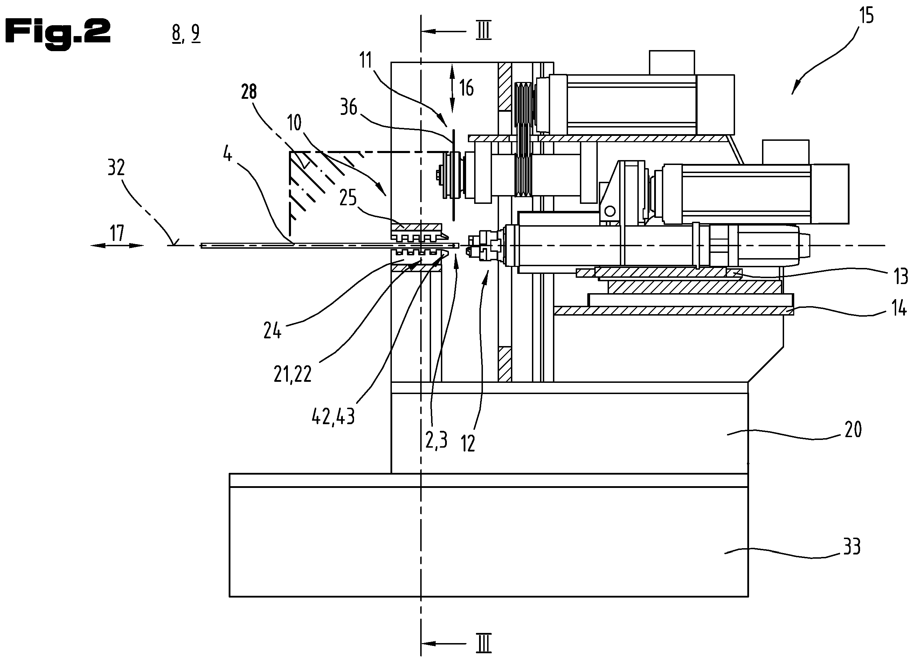

In der Fig. 2 ist eine weitere und gegebenenfalls für sich eigenständige Ausführungsform der Bearbeitungsvorrichtung 8, bzw. 9 gezeigt, wobei wiederum für gleiche Teile gleiche Bezugszeichen bzw. Bauteilbezeichnungen wie in den vorangegangenen Fig. 1 verwendet werden. Um unnötige Wiederholungen zu vermeiden, wird auf die detaillierte Beschreibung in den vorangegangenen Fig. 1 hingewiesen bzw. Bezug genommen.

Die Klemmvorrichtung 10 ist an dem Maschinengestell 20 gehaltert und umfasst eine bezogen auf die Förderebene 6 untere Klemmbacke 24 und eine obere Klemmbacke 25, welche in vertikaler Richtung, bzw. in Richtung der ersten Bewegungsrichtung 16 beweglich sind. Wird ein stangenförmiges Werkstück 4, bzw. deren erster oder zweiter Endbereich 21, bzw. 22 zur jeweiligen Bearbeitungsvorrichtung 8, bzw. 9 befördert, besteht die Möglichkeit, dass das stangenförmige Werkstück 4 mittels der unteren Klemmbacke 24 aufgenommen wird. Die Aufnahme des stangenförmigen Werkstücks 4 kann durch eine Bewegung des unteren Klemmbacke 24 in vertikaler Richtung bewerkstelligt werden. In weiterer Folge kann das stangenförmige Werkstück 24 mittels der oberen Klemmbacke 25 gehalten werden um dieses anschließend präzise bearbeiten zu können.

Das Sägeblatt 36 kann wie in Fig. 2 dargestellt derartige Abmessungen aufweisen, dass bei einer Bewegung in Richtung der zweiten Bewegungsrichtung 17 keine Kollision des Sägeblatts 36 möglich ist, bzw. ist die Sägevorrichtung 11 auf dem gemeinsamen Tragelement 14 derartig angeordnet, dass bei einer Bewegung der Werkzeugeinheit 15 in Richtung der zweiten Bearbeitungsrichtung 17 ein Freiraum zwischen der Klemmvorrichtung 10, bzw. der oberen Klemmbacke 25 der Klemmvorrichtung 10 und dem Sägeblatt 36, bzw. der Sägevorrichtung 11 besteht, sodass eine Bearbeitung des Endes 2, bzw. 3, oder beziehungsweise des ersten Endbereichs 21, bzw. des zweiten Endbereichs 22 möglich ist. Des Weiteren kann die Positionierung der Sägevorrichtung 11 auf dem gemeinsamen Tragelement 14 derart gewählt sein, dass beim Kappen von zumindest dem zumindest einem stangenförmigen Element 4 ein Freiraum zwischen der Klemmvorrichtung 10 und der Sägevorrichtung 11 besteht, sodass keine Kollision zwischen Komponenten der Werkzeugeinheit 15 und anderen Maschinenkomponenten möglich ist.

Weiters kann vorgesehen sein, dass die Anfasvorrichtung 12 relativ zu dessen Maschinengehäuse 13 in Richtung der zweiten Bearbeitungsrichtung 17 bewegbar ist. Durch diese Maßnahme ist ein erweiterter Bearbeitungsbereich der Werkzeugeinheit 15 gegeben, wobei gleichzeitig der Bearbeitungsweg der Werkzeugeinheit 15 bei Zustellung der gesamten Werkzeugeinheit 15 verringert werden kann.

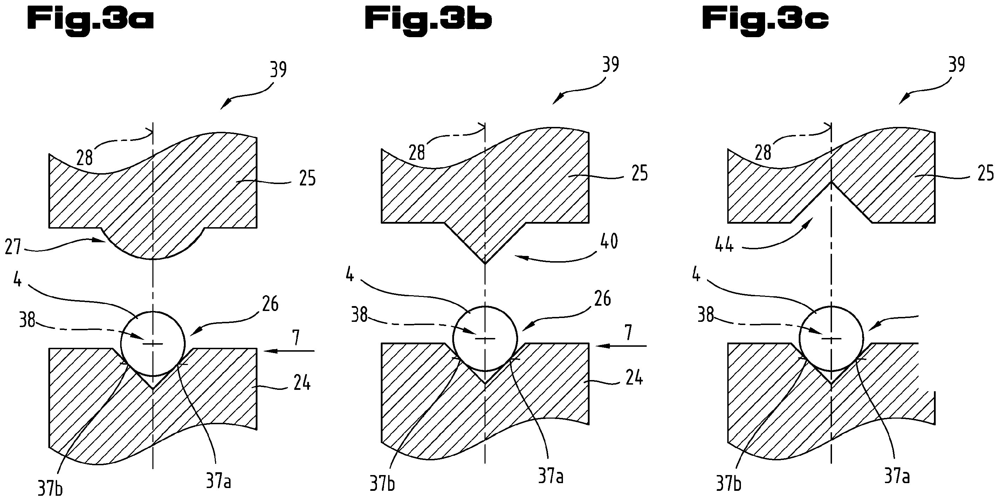

In der Fig. 3, bzw. in Fig. 3a, Fig. 3b und Fig 3c sind drei gegebenenfalls für sich eigenständige Ausführungsformen der unteren Klemmbacke 24 und der oberen Klemmbacke 25 der Klemmvorrichtung 10 gezeigt, wobei wiederum für gleiche Teile gleiche Bezugszeichen bzw. Bauteilbezeichnungen wie in den vorangegangenen Darstellungen verwendet werden. Die untere Klemmbacke 24 weist eine auf eine Querschnittsfläche 39 projizierte V-förmige Werkstückaufnahme 26 auf. Die Werkstückaufnahme 26 ist dabei derart ausgerichtet, dass ein stangenförmiges Werkstück 4 darin aufnehmbar ist, wobei eine Werkstücklängsachse 38 normal zur Querschnittsfläche 39 ausrichtbar ist und mittels der, die V-förmige Werkstückaufnahme 26 ausbildenden Berührungsflanken 37a, 37b das stangenförmige Werkstück 4 positionierbar und in Förderrichtung 7 haltbar ist.

Die obere Klemmbacke 25 kann die untere Klemmbacke 24 zumindest teilweise ergänzend, bzw. formkomplementär ausgebildet sein. Wie in Fig. 3a dargestellt kann im Bereich der Werkstückaufnahme 26 eine auf die Querschnittsfläche 39 projizierte konvexe Wölbung als eine Andruckfläche 27 ausgeformt sein. Wird die obere Klemmbacke 24 zur oberen Klemmbacke 25 herangeführt, bzw. umgekehrt, so wird das in die Werkstückaufnahme 26 eingelegte stangenförmige Werkstück 4 mittels der Andruckfläche 27 in der Werkstückaufnahme 26 gehalten. Somit entsteht im Wesentlichen eine statisch bestimmte Halterung des entsprechenden Endbereichs eines stangenförmigen Werkstücks 4 mittels der drei Berührungspunkte zwischen unterer Klemmbacke 24, oberer Klemmbacke 25 und dem stangenförmigen Werkstück 4.

Es ist möglich und vorteilhaft, wenn die Werkstückaufnahme 26 bezogen auf eine vertikale Symmetrieebene 28 symmetrisch ausgebildet ist. Demzufolge liegt die Werkstücklängsachse 38 des in der Werkstückaufnahme 26 positionierten stangenförmigen Werkstücks 4 in der Symmetrieebene 28, wodurch die Lage bezüglich der Förderrichtung 5 des stangenförmigen Werkstücks 4 festgelegt ist.

Es ist möglich, dass die obere Klemmbacke 25 zumindest teilweise formkomplementär zur unteren Klemmbacke 24 ausgebildet ist, wobei, wie in Fig. 3b dargestellt, im Bereich der Werkstückaufnahme 26 eine im Querschnitt V-förmige aber komplementäre Andruckschneide 40 gebildet sein kann. Dabei ist die Möglichkeit gegeben, dass die Geometrie der die Andruckschneide 40 bildenden im Querschnitt V-förmigen Flanken einen zu einer Horizontalen flacheren Winkel als die Berührungsflanken 37a, 37b aufweisen. Somit entsteht im Wesentlichen wiederum eine statisch bestimmte Halterung des entsprechenden Endbereichs eines stangenförmigen Werkstücks 4 mittels der drei Berührungspunkte zwischen unterer Klemmbacke 24, oberer Klemmbacke 25 und dem stangenförmigen Werkstück 4.

Beide mögliche Ausführungsformen der oberen Klemmbacke 25 haben den vorteilhaften Effekt, dass stangenförmige Werkstücke 4 mit unterschiedlichen mittleren Durchmessern aufnehmbar und mittels der Klemmvorrichtung 10 klemmbar sind. Beispielsweise kann ein stangenförmiges Werkstück 4 mit einem mittleren Durchmesser der geringer ist als die lichte Tiefe der Werkstückaufnahme 26 mittels der konvexen Andruckfläche 27, bzw. mittels der Andruckschneide 40 in der Klemmvorrichtung 10 gehalten werden.

Weiters kann eine vorteilhafte Ausgestaltung sein, dass die obere Klemmbacke 25 bezüglich deren Grundform eine im Querschnitt V-förmige Werkstückklemmung 44 aufweist. Dabei kann die V-förmige Werkstückklemmung 44 im Wesentlichen bezüglich deren Grundform eine im Querschnitt und bezogen auf eine Horizontalebene oder auf die Förderebene 6 gespiegelte gleiche oder ähnliche Querschnittsform wie die V-förmige Werkstückaufnahme 26 aufweisen. Im Wesentlichen können somit die untere Klemmbacke 24 und die obere Klemmbacke 25 jeweils eine Ausnehmung zur Aufnahme bzw. zur Klemmung des zumindest einen stangenförmigen Werkstücks 4 auf, wobei die jeweiligen Ausnehmungen gegenüberliegend ausgerichtet sind.

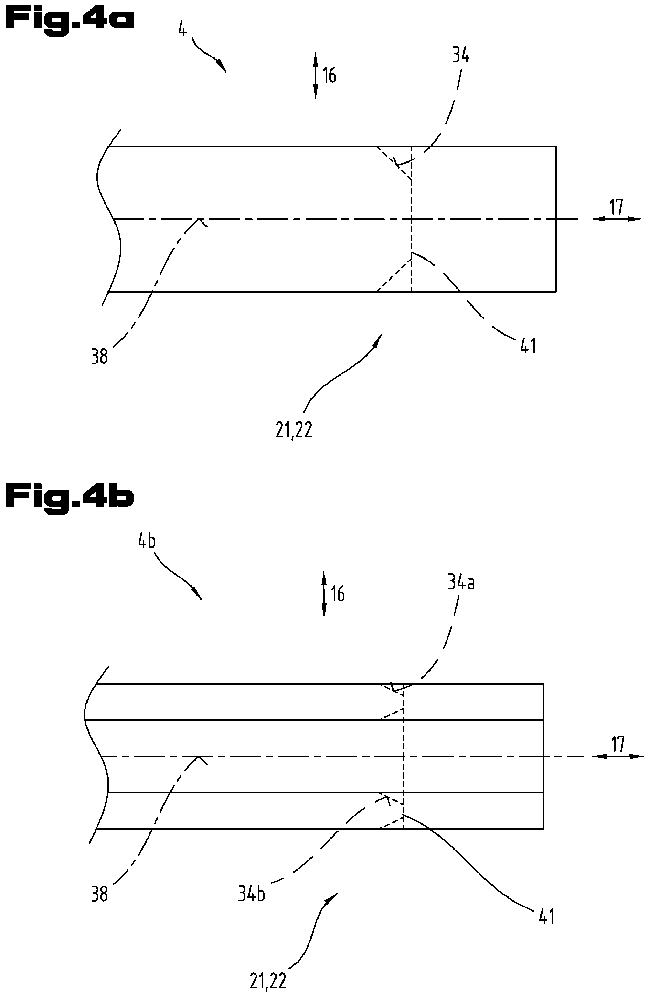

In der Fig. 4, bzw. Fig. 4a und Fig. 4b sind zum besseren Verständnis der erste Endbereich 21, bzw. der zweite Endbereich 22 eines stangenförmigen Werkstücks 4 gezeigt, wobei wiederum für gleiche Teile gleiche Bezugszeichen bzw. Bauteilbezeichnungen wie in den vorangegangenen Darstellungen verwendet werden. Es besteht die Möglichkeit, dass das zumindest eine stangenförmige Werkstück 4 nach dem Kappen entlang einer Schnittlinie 41 mit der zumindest einen Anfasvorrichtung 12 verschiedenartig weiterbearbeitet wird. Die Anfasvorrichtung 12 kann eine drehende und spanabhebende Bearbeitungsmaschine sein. Demzufolge besteht die Möglichkeit, dass neben Fase 34, bzw. 34a, welche eine Außenfase bezogen auf das stangenförmige Werkstück 4 ist, auch eine Fase 34b als Innenfase bei beispielsweise einem rohrförmigen Werkstück 4b aufgebracht wird.

In der Fig. 5 ist eine weitere und gegebenenfalls für sich eigenständige Ausführungsformen einer ersten Anfasvorrichtung 12 und einer zweiten Anfasvorrichtung 31 auf deren gemeinsamen Tragelement 14 einer Werkzeugeinheit 15 gezeigt, wobei wiederum für gleiche Teile gleiche Bezugszeichen bzw. Bauteilbezeichnungen wie in den vorangegangenen Darstellungen verwendet werden. Wie dargestellt kann eine Werkzeugeinheit 15 zwei Anfasvorrichtungen 12, 31 umfassen, welche beide auf dem gemeinsamen Tragelement 14 mittels dem Maschinengehäuse 13 und dem zweiten Maschinengehäuse 31 gehaltert sind. Vorteilhaft kann dabei sein, dass die Positionierung der Anfasvorrichtungen 12, 31 in der Art korrespondierend zur unteren Klemmbacke 24, bzw. zur Klemmvorrichtung 10 angeordnet sind, dass die vertikale Symmetrieebene 28 der jeweiligen Werkstückaufnahmen 26c, 26d mit den jeweiligen Bearbeitungsdrehachse 32c, 32d fluchten. Dadurch sind die stangenförmigen Werkstücke 4, 23 derart positioniert, dass die Werkstücklängsachsen 38c, 38d mit den Bearbeitungsdrehachse 32c, 32d der Anfasvorrichtungen 12, 31 fluchten und eine präzise Fase auf die stangenförmigen Werkstücke gleichzeitig in einem Arbeitsgang bei Bewegung der Werkzeugeinheit 15 in Richtung der zweiten Bearbeitungsrichtung 17 aufgebracht wird.

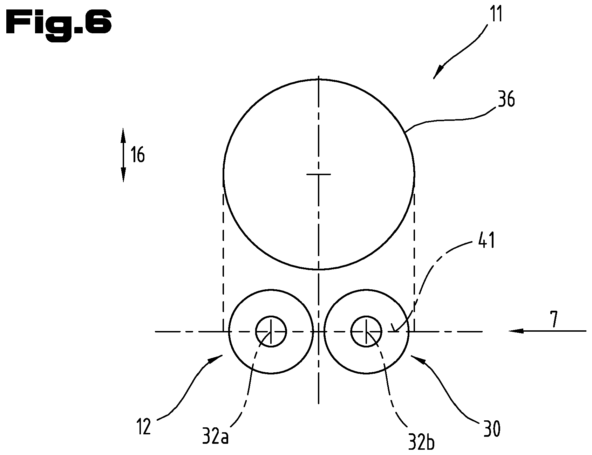

In Fig. 6 ist eine weitere und gegebenenfalls für sich eigenständige Ausführungsform einer Anordnung der Sägevorrichtung 11, der zumindest einen ersten Anfasvorrichtung 12 und der zweiten Anfasvorrichtung 30 gezeigt, wobei wiederum für gleiche Teile gleiche Bezugszeichen bzw. Bauteilbezeichnungen wie in den vorangegangenen Darstellungen verwendet werden. Es zeigt Fig. 6 die entlang der Förderrichtung 7 beabstandet angeordneten zumindest eine erste Anfasvorrichtung 12 und die zweite Anfasvorrichtung 30 mit deren Bearbeitungsdrehachsen 32a, bzw. 32b. Des Weiteren ist die Anordnung des Sägeblatts 36 der Sägevorrichtung 11 dargestellt, wobei die Schnittlinie 41 der Sägevorrichtung 11 das zumindest eine stangenförmige Werkstückst 4 und das zweite stangenförmige Werkstück 23 überdeckt. Somit ist sichergestellt, dass der jeweilige erste Endabschnitt 42 und der jeweilige Endabschnitt 43 beider stangenförmigen Werkstücke 4, bzw. 23 (siehe Fig. 5) bei einer Bewegung der Werkzeugeinheit 15 in Richtung der ersten Bearbeitungsrichtung 16 gekappt werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| | | 30 | Zweite Anfasvorrichtung |
| 1 | Anlage | 31 | Zweites Maschinengehäuse |
| 2 | Erstes Ende | 32 | Bearbeitungsdrehachse |
| 3 | Zweites Ende | 33 | Gemeinsames Grundgestell |
| 4 | stangenförmiges Werkstück | 34 | Fase |
| 5 | Fördervorrichtung | 35 | Transportorgan |
| 6 | Förderebene | 36 | Sägeblatt |
| 7 | Förderrichtung | 37 | Berührungsflanke |
| 8 | Erste Bearbeitungsvorrichtung | 38 | Werkstücklängsachse |
| 9 | Zweite Bearbeitungsvorrichtung | 39 | Querschnittsfläche |
| 10 | Klemmvorrichtung | 40 | Andruckschneide |
| 11 | Sägevorrichtung | 41 | Schnittlinie |
| 12 | Anfasvorrichtung | 42 | Erster Endabschnitt |
| 13 | Maschinengehäuse | 43 | Zweiter Endabschnitt |
| 14 | Gemeinsames Tragelement | 44 | Werkstückklemmung |
| 15 | Werkzeugeinheit | | |
| 16 | Erste Bearbeitungsrichtung | | |
| 17 | Zweite Bearbeitungsrichtung | | |
| 18 | Erstes Fördermittel | | |
| 19 | Zweites Fördermittel | | |
| 20 | Maschinengestell | | |
| 21 | Erster Endbereich | | |
| 22 | Zweiter Endbereich | | |
| 23 | Zweites stangenförmiges Werkstück | | |
| 24 | Untere Klemmbacke | | |
| 25 | Obere Klemmbacke | | |
| 26 | Werkstückaufnahme | | |
| 27 | Andruckfläche | | |
| 28 | Vertikale Symmetrieebene | | |
| 29 | Wannenförmige Transportaufnahme | | |

## Patentansprüche

1. Anlage (1) zum Bearbeiten eines ersten Endes (2) und eines zweiten Endes (3) von zumindest einem stangenförmigen Werkstück (4), umfassend
- eine Fördervorrichtung (5), in welcher das zumindest eine stangenförmige Werkstück (4) in einer Förderebene (6) quer zu einer Förderrichtung (7) positionierbar ist und mittels welcher Fördervorrichtung (5) das zumindest eine stangenförmige Werkstück (4) in Förderrichtung (7) förderbar ist,
- eine erste Bearbeitungsvorrichtung (8) und eine zweite Bearbeitungsvorrichtung (9), wobei der ersten Bearbeitungsvorrichtung (8) das erste Ende (2) des zumindest einen stangenförmigen Werkstücks (4) und der zweiten Bearbeitungsvorrichtung (9) das zweite Ende (3) des zumindest einen stangenförmigen Werkstücks (4) mittels der Fördervorrichtung (5) zuführbar ist,
- die erste Bearbeitungsvorrichtung (8) und die zweite Bearbeitungsvorrichtung (9) jeweils eine Klemmvorrichtung (10a, 10b), eine Sägevorrichtung (11a, 11b) und zumindest eine Anfasvorrichtung (12a, 12b) aufweisend,
- wobei bei der ersten Bearbeitungsvorrichtung (8) und bei der zweiten Bearbeitungsvorrichtung (9) jeweils die Sägevorrichtung (11) und ein Maschinengehäuse (13) der zumindest einen Anfasvorrichtung (12) auf einem gemeinsamen Tragelement (14) angeordnet sind und gegenüber dem gemeinsamen Tragelement (14) ortsfest gehaltert sind,
- und wobei bei der ersten Bearbeitungsvorrichtung (8) und bei der zweiten Bearbeitungsvorrichtung (9) jeweils die Sägevorrichtung (11), das Maschinengehäuse (13) mit der zumindest einen Anfasvorrichtung (12) und das gemeinsame Tragelement (14) eine erste Werkzeugeinheit (15a) und eine zweite Werkzeugeinheit (15b) bilden,
**dadurch gekennzeichnet,**
- **dass** die erste Werkzeugeinheit (15a) der ersten Bearbeitungsvorrichtung (8) gegenüber einem ersten Maschinengestell (20a) und die zweite Werkzeugeinheit (15b) der zweiten Bearbeitungsvorrichtung (9) gegenüber einem zweiten Maschinengestell (20b) entlang einer normal zur Förderebene (6) ausgerichteten ersten Bearbeitungsrichtung (16) und entlang einer zur Förderrichtung (7) orthogonal und zur Förderebene (6) parallel ausgerichteten zweiten Bearbeitungsrichtung (17) bewegbar sind, und
- **dass** die jeweilige Klemmvorrichtung (10a, 10b) gegenüber dem ersten und zweiten Maschinengestell (20a, 20b) der jeweiligen Bearbeitungsvorrichtung (8, 9) entlang der ersten Bearbeitungsrichtung (16) bewegbar und positionierbar ist, wobei ein erster Endbereich (21) und ein zweiter Endbereich (22) des zumindest einen stangenförmigen Werkstücks (4) in der jeweiligen Klemmvorrichtung (10a, 10b) der ersten Bearbeitungsvorrichtung (8) und der zweiten Bearbeitungsvorrichtung (9) aufnehmbar bzw. positionierbar sind.

2. Anlage nach Anspruch 1, **dadurch gekennzeichnet, dass** die Fördervorrichtung (5), die erste Bearbeitungsvorrichtung (8) und die zweite Bearbeitungsvorrichtung (9) auf einem gemeinsamen Grundgestell (33) gehaltert sind, wobei eine Bearbeitungsdrehachse (32a) der zumindest einen Anfasvorrichtung (12a) der ersten Bearbeitungsvorrichtung (8) mit einer Bearbeitungsdrehachse (32b) der zumindest einen Anfasvorrichtung (12b) der zweiten Bearbeitungsvorrichtung (9) fluchtend ausgerichtet ist.

3. Anlage nach einem der vorherigen Ansprüche, **dadurch gekennzeichnet, dass** die Fördervorrichtung (5) ein erstes Fördermittel (18) und ein zweites Fördermittel (19) umfasst, welches erste Fördermittel (18) an dem ersten Maschinengestell (20a) der ersten Bearbeitungsvorrichtung (8) und welches zweite Fördermittel (19) an dem zweiten Maschinengestell (20b) der zweiten Bearbeitungsvorrichtung (9) gehaltert ist, wobei das erste Fördermittel (18) und das zweite Fördermittel (19) bewegungsgekoppelt sind.

4. Anlage nach einem der vorherigen Ansprüche, **dadurch gekennzeichnet, dass** die jeweilige Werkzeugeinheit (15a, 15b) der ersten Bearbeitungsvorrichtung (8) und der zweiten Bearbeitungsvorrichtung (9) neben der zumindest einen Anfasvorrichtung (12) zumindest eine zweite Anfasvorrichtung (30) mit einem zweiten Maschinengehäuse (31) umfasst, wobei die Maschinengehäuse (13, 31) der zumindest einen Anfasvorrichtung (12) und der zumindest einen zweiten Anfasvorrichtung (30) am gemeinsamen Tragelement (14) entlang der Förderrichtung (7) zueinander beabstandet angeordnet sind.

5. Anlage nach Anspruch 4, **dadurch gekennzeichnet, dass** die zumindest eine Anfasvorrichtung (12) gegenüber dessen Maschinengehäuse (13) und die zweite Anfasvorrichtung (30) gegenüber dessen zweiten Maschinengehäuse (31) in Richtung entlang der zweiten Bearbeitungsrichtung (17) bewegungsgekoppelt bewegbar und bewegungsgekoppelt positionierbar sind.

6. Anlage nach einem der vorherigen Ansprüche, **dadurch gekennzeichnet, dass** mittels der jeweiligen Sägevorrichtung (11a, 11b) der ersten Bearbeitungsvorrichtung (8) und der zweiten Bearbeitungsvorrichtung (9) bei einer Bewegung der Werkzeugeinheit (15) entlang der ersten Bearbeitungsrichtung (16) das erste Ende (2) und das zweite Ende (3) des zumindest einen ersten stangenförmigen Werkstücks (4) und eines zweiten stangenförmigen Werkstücks (23) kappbar sind.

7. Anlage nach einem der vorherigen Ansprüche, **dadurch gekennzeichnet, dass** die Klemmvorrichtung (10a) der ersten Bearbeitungsvorrichtung (8) und die Klemmvorrichtung (10b) der zweiten Bearbeitungsvorrichtung (9) jeweils eine, bezogen auf die Förderebene (6), untere Klemmbacke (24) und eine obere Klemmbacke (25) aufweist, wobei bei der unteren Klemmbacke (24) zumindest eine im Querschnitt V-förmige Werkstückaufnahme (26) für das zumindest eine stangenförmige Werkstück (4) ausgebildet ist.

8. Anlage nach Anspruch 7, **dadurch gekennzeichnet, dass** die obere Klemmbacke (25) im Bereich der V-förmigen Werkstückaufnahme (26) eine im Querschnitt V-förmige Werkstückklemmung (44) aufweist, wobei die Querschnittsgeometrie der V-förmigen Werkstückaufnahme (26) und der V-förmigen Werkstückklemmung (44) im Wesentlichen symmetrisch bezüglich der Förderebene (6) oder symmetrisch bezüglich einer horizontalen Ebene ausgestaltet sind.

9. Anlage nach Anspruch 7 oder 8, **dadurch gekennzeichnet, dass** die obere Klemmbacke (25) zur unteren Klemmbacke (24) zumindest teilweise formkomplementär ausgebildet ist, wobei die obere Klemmbacke (25) im Bereich der V-förmigen Werkstückaufnahme (26) eine im Querschnitt konvexe oder V-förmige Andruckfläche (27) aufweist.

10. Anlage nach Anspruch 7, 8 oder 9, **dadurch gekennzeichnet, dass** die jeweilige Werkstückaufnahme (26) bezüglich einer vertikalen Symmetrieebene (28) symmetrisch ausgebildet ist, wobei jeder Werkstückaufnahme (26) der Anlage (1) eine Anfasvorrichtung (12) zugeordnet ist und wobei die Bearbeitungsdrehachse (32) der zugeordneten Anfasvorrichtung (12) in der vertikalen Symmetrieebene (28) der jeweiligen Werkstückaufnahme (26) liegt.

11. Anlage nach einem der vorherigen Ansprüche, **dadurch gekennzeichnet, dass** die Klemmvorrichtung (10a) der ersten Bearbeitungsvorrichtung (8) und die Klemmvorrichtung (10b) der zweiten Bearbeitungsvorrichtung (9) und insbesondere die jeweilige untere Klemmbacke (24) und die jeweilige obere Klemmbacke (25) gegenüber dem ersten und zweiten Maschinengestell (20a, 20b) in Richtung entlang der ersten Bearbeitungsrichtung (16) bewegungsgekoppelt bewegbar und bewegungsgekoppelt positionierbar sind.

12. Anlage nach einem der vorherigen Ansprüche, **dadurch gekennzeichnet, dass** die Fördervorrichtung (5) zumindest zwei Transportorgane (35) aufweist, welche zumindest zwei Transportorgane (35) jeweils zwei oder mehr im Querschnitt wannenförmige Transportaufnahmen (29) aufweisen, wobei die wannenförmigen Transportaufnahmen (29) in Förderrichtung (7) aneinandergereiht sind und wobei das zumindest eine stangenförmigen Werkstücke (4) in jeweils einer wannenförmigen Transportaufnahme (29) jedes Transportorgans (35) in Förderrichtung (7) frei beweglich positionierbar ist.

13. Bearbeitungsverfahren zum gleichzeitigen Bearbeiten eines ersten Endes (2) und eines zweiten Endes (3) von zumindest einem stangenförmigen Werkstück (4) mittels einer Anlage (1), umfassend
eine Fördervorrichtung (5), eine erste Bearbeitungsvorrichtung (8) und eine zweite Bearbeitungsvorrichtung (9),
wobei die erste Bearbeitungsvorrichtung (8) und die zweite Bearbeitungsvorrichtung (9) jeweils eine Klemmvorrichtung (10a, 10b) und eine Werkzeugeinheit (15a, 15b) aufweist, welche Werkzeugeinheiten (15a, 15b) jeweils zumindest eine Anfasvorrichtung (12) in einem Maschinengehäuse (13) und eine Sägevorrichtung (11) aufweisen,
das Bearbeitungsverfahren umfassend die Schritte:
- Positionieren des zumindest einen stangenförmigen Werkstücks (4) in einer Förderebene (6) der Fördervorrichtung (5) quer zu einer Förderrichtung (7);
- gleichzeitiges Zuführen des ersten Endes (2) des zumindest einen stangenförmigen Werkstücks (4) zu der ersten Bearbeitungsvorrichtung (8) und des zweiten Endes (3) des zumindest einen stangenförmigen Werkstücks (4) zu der zweiten Bearbeitungsvorrichtung (9) mittels der Fördervorrichtung (5);
- Positionieren eines ersten Endbereichs (21) und eines zweiten Endbereichs (22) des zumindest einen stangenförmigen Werkstücks (4) in der jeweiligen Klemmvorrichtung (10a, 10b) der ersten Bearbeitungsvorrichtung (8) und der zweiten Bearbeitungsvorrichtung (9);
- Halten der jeweiligen Endbereiche (21, 22) des zumindest eines stangenförmigen Werkstücks (4) jeweils mittels einer unteren Klemmbacke (24) und einer oberen Klemmbacke (25) der jeweiligen Klemmvorrichtung (10a, 10b);
- Abkappen eines ersten Endabschnitts (42) und eines zweiten Endabschnitts (43) des zumindest einen stangenförmigen Werkstücks (4) mittels der jeweiligen Sägevorrichtung (11a, 11b) der ersten Bearbeitungsvorrichtung (8) und der zweiten Bearbeitungsvorrichtung (9);
- spanabhebendes Bearbeiten zum Aufbringen von zumindest einer Fase (34) am ersten Ende (2) und am zweiten Ende (3) des zumindest eines stangenförmigen Werkstücks (4) jeweils mittels der zumindest einen Anfasvorrichtung (12a, 12b) der ersten Bearbeitungsvorrichtung (8) und der zweiten Bearbeitungsvorrichtung (9);
- wobei die Sägevorrichtung (11) und das Maschinengehäuse (13) der zumindest einen Anfasvorrichtung (12) als eine bewegungsgekoppelte Werkzeugeinheit (15) bewegt werden,
**dadurch gekennzeichnet,**
- **dass** die jeweilige Werkzeugeinheit (15a, 15b) relativ zu einem jeweiligen Maschinengestell (20a, 20b) bewegt wird ,
- wobei der erste Endabschnitt (42) und der zweite Endabschnitt (43) des zumindest einen stangenförmigen Werkstücks (4) mittels der jeweiligen in Betrieb befindlichen Sägeeinheiten (11a, 11b) bei Bewegung der jeweiligen Werkzeugeinheit (15a, 15b) entlang einer normal zur Förderebene (6) ausgerichteten ersten Bearbeitungsrichtung (16) gekappt werden,
- und wobei die zumindest eine Fase am ersten Ende (2) und am zweiten Ende (3) des zumindest einen stangenförmigen Werkstücks (4) mittels der jeweiligen in Betrieb befindlichen Anfasvorrichtungen (12a, 12b) bei Bewegung der jeweiligen Werkzeugeinheit (15a, 15b) entlang einer zur Förderrichtung (7) orthogonal und zur Förderebene (6) parallel ausgerichteten zweiten Bearbeitungsrichtung (17) aufgebracht wird,
- und **dass** der erste Endbereich (21) und der zweite Endbereich (22) des zumindest einen stangenförmigen Werkstücks (4) jeweils durch Bewegung bzw. Positionierung der Klemmvorrichtung (10a, 10b) relativ zum Maschinengestelle (20a, 20b) entlang der ersten Bearbeitungsrichtung (16) von der Fördervorrichtung (5) aufgenommen und an der jeweiligen Bearbeitungsvorrichtung (8, 9) positioniert wird.

14. Verfahren nach Anspruch 13, **dadurch gekennzeichnet, dass** der jeweilige erste Endabschnitt (42) und der jeweilige zweite Endabschnitt (43) von zwei stangenförmigen Werkstücken (4, 23) mittels der jeweiligen Sägevorrichtung (11a, 11b) gleichzeitig gekappt wird.

15. Verfahren nach Anspruch 14, **dadurch gekennzeichnet, dass** die erste Bearbeitungsvorrichtung (8) und die zweite Bearbeitungsvorrichtung (9) jeweils zwei Anfasvorrichtungen (12a, 12b) aufweisen, welche zwei Anfasvorrichtungen (12a, 12b) entlang der Förderrichtung (7) beabstandet angeordnet sind, wobei das jeweilige erste Ende (2) und das jeweilige zweite Ende (3) von zwei stangenförmigen Werkstücken (4, 23) mittels der jeweils zwei Anfasvorrichtungen (12a, 12b) gleichzeitig spanabhebend bearbeitet wird.

## Claims

1. System (1) for processing a first end (2) and a second end (3) of at least one rod-shaped workpiece (4), comprising
- a conveying device (5) in which the at least one rod-shaped workpiece (4) can be positioned in a conveying plane (6) transversely to a conveying direction (7) and by means of which conveying device (5) the at least one rod-shaped workpiece (4) can be conveyed in the conveying direction (7),
- a first processing device (8) and a second processing device (9), wherein, by means of the conveying device (5), the first end (2) of the at least one rod-shaped workpiece (4) can be supplied to the first processing device (8) and the second end (3) of the at least one rod-shaped workpiece (4) can be supplied to the second processing device (9),
- the first processing device (8) and the second processing device (9) each having a clamping device (10a, 10b), a sawing device (11a, 11b) and at least one chamfering device (12a, 12b),
- wherein in the first processing device (8) and in the second processing device (9), in each case the sawing device (11) and a machine housing (13) of the at least one chamfering device (12) are arranged on a joint support element (14) and are held in a fixed position relative to the joint support element (14),
- and wherein, in the first processing device (8) and in the second processing device (9), the sawing device (11), the machine housing (13) with the at least one chamfering device (12) and the joint support element (14) each form a first tool unit (15a) and a second tool unit (15b),
**characterized in that**
- the first tool unit (15a) of the first processing device (8) is movable relative to a first machine frame (20a) and the second tool unit (15b) of the second processing device (9) is movable relative to a second machine frame (20b) along a first processing direction (16) aligned normal to the conveying plane (6) and along a second processing direction (17) aligned orthogonal to the conveying direction (7) and parallel to the conveying plane (6), and
- the respective clamping device (10a, 10b) is movable and positionable relative to the first and second machine frame (20a, 20b) of the respective processing device (8, 9) along the first processing direction (16), a first end region (21) and a second end region (22) of the at least one rod-shaped workpiece (4) being receivable or positionable in the respective clamping device (10a, 10b) of the first processing device (8) and of the second processing device (9).

2. System according to claim 1, **characterized in that** the conveying device (5), the first processing device (8) and the second processing device (9) are mounted on a joint baseframe (33), a processing rotation axis (32a) of the at least one chamfering device (12a) of the first processing device (8) being aligned with a processing rotation axis (32b) of the at least one chamfering device (12b) of the second processing device (9).

3. System according to any of the preceding claims, **characterized in that** the conveying device (5) comprises a first conveying means (18) and a second conveying means (19), which first conveying means (18) is mounted on the first machine frame (20a) of the first processing device (8) and which second conveying means (19) is mounted on the second machine frame (20b) of the second processing device (9), wherein the first conveying means (18) and the second conveying means (19) are motion-coupled.

4. System according to any of the preceding claims, **characterized in that** the respective tool unit (15a, 15b) of the first processing device (8) and of the second processing device (9) comprises, in addition to the at least one chamfering device (12), at least one second chamfering device (30) with a second machine housing (31), the machine housings (13, 31) of the at least one chamfering device (12) and of the at least one second chamfering device (30) being arranged at a distance from one another on the joint support element (14) along the conveying direction (7).

5. System according to claim 4, **characterized in that** the at least one chamfering device (12) is movable and positionable in a motion-coupled manner relative to its machine housing (13) and the second chamfering device (30) is movable and positionable in a motion-coupled manner relative to its second machine housing (31), each in the direction along the second processing direction (17).

6. System according to any of the preceding claims, **characterized in that** the first end (2) and the second end (3) of the at least one first rod-shaped workpiece (4) and of a second rod-shaped workpiece (23) can be cut by means of the respective sawing device (11a, 11b) of the first processing device (8) and of the second processing device (9) during a movement of the tool unit (15) along the first processing direction (16).

7. System according to any of the preceding claims, **characterized in that** the clamping device (10a) of the first processing device (8) and the clamping device (10b) of the second processing device (9) each have a lower clamping jaw (24) and an upper clamping jaw (25) relative to the conveying plane (6), at least one workpiece holder (26) with a V-shaped cross-section being formed in the lower clamping jaw (24) for the at least one rod-shaped workpiece (4).

8. System according to claim 7, **characterized in that** the upper clamping jaw (25) has a workpiece clamp (44) with a V-shaped cross-section in the region of the V-shaped workpiece holder (26), the cross-sectional geometry of the V-shaped workpiece holder (26) and the V-shaped workpiece clamp (44) being configured essentially symmetrically relative to the conveying plane (6) or symmetrically relative to a horizontal plane.

9. System according to claim 7 or 8, **characterized in that** the upper clamping jaw (25) is at least partially complementary in shape to the lower clamping jaw (24), the upper clamping jaw (25) having a clamping surface (27) which is convex or V-shaped in cross-section in the region of the V-shaped workpiece holder (26).

10. System according to claim 7, 8 or 9, **characterized in that** the respective workpiece holder (26) is configured symmetrically relative to a vertical symmetry plane (28), wherein a chamfering device (12) is assigned to each workpiece holder (26) of the system (1) and wherein the processing rotation axis (32) of the assigned chamfering device (12) lies in the vertical symmetry plane (28) of the respective workpiece holder (26).

11. System according to any of the preceding claims, **characterized in that** the clamping device (10a) of the first processing device (8) and the clamping device (10b) of the second processing device (9) and, in particular, the respective lower clamping jaw (24) and the respective upper clamping jaw (25) are movable and positionable in a movement-coupled manner relative to the first and second machine frame (20a, 20b) in the direction along the first processing direction (16).

12. System according to any of the preceding claims, **characterized in that** the conveying device (5) has at least two transport components (35), which at least two transport components (35) each have two or more transport holders (29) trough-shaped in cross-section, wherein the trough-shaped transport receptacles (29) are lined up in the conveying direction (7) and wherein the at least one rod-shaped workpiece (4) can be positioned in a freely movable configuration in the conveying direction (7) in a respective trough-shaped transport receptacle (29) of each transport component (35).

13. Processing method for simultaneously processing a first end (2) and a second end (3) of at least one rod-shaped workpiece (4) by means of a system (1), comprising
a conveying device (5), a first processing device (8) and a second processing device (9), wherein the first processing device (8) and the second processing device (9) each have a clamping device (10a, 10b) and a tool unit (15a, 15b), which tool units (15a, 15b) each have at least one chamfering device (12) in a machine housing (13) and a sawing device (11),
the processing method comprising the steps:
- positioning the at least one rod-shaped workpiece (4) in a conveying plane (6) of the conveying device (5) transversely to a conveying direction (7);
- simultaneously supplying the first end (2) of the at least one rod-shaped workpiece (4) to the first processing device (8) and the second end (3) of the at least one rod-shaped workpiece (4) to the second processing device (9) by means of the conveying device (5);
- positioning a first end region (21) and a second end region (22) of the at least one rod-shaped workpiece (4) in the respective clamping device (10a, 10b) of the first processing device (8) and the second processing device (9);
- holding the respective end regions (21, 22) of the at least one rod-shaped workpiece (4) in each case by means of a lower clamping jaw (24) and an upper clamping jaw (25) of the respective clamping device (10a, 10b);
- cutting off a first end portion (42) and a second end portion (43) of the at least one rod-shaped workpiece (4) by means of the respective sawing device (11a, 11b) of the first processing device (8) and the second processing device (9);
- machining for applying at least one chamfer (34) to the first end (2) and to the second end (3) of the at least one rod-shaped workpiece (4) in each case by means of the at least one chamfering device (12a, 12b) of the first processing device (8) and of the second processing device (9);
- wherein the sawing device (11) and the machine housing (13) of the at least one chamfering device (12) are moved as a motion-coupled tool unit (15),
**characterized in that**
- the respective tool unit (15a, 15b) is moved relative to a respective machine frame (20a, 20b),
- wherein the first end portion (42) and the second end portion (43) of the at least one rod-shaped workpiece (4) are cut by means of the respective sawing units (11a, 11b) in operation during movement of the respective tool unit (15a, 15b) along a first processing direction (16) aligned normal to the conveying plane (6),
- and wherein the at least one chamfer is applied to the first end (2) and to the second end (3) of the at least one rod-shaped workpiece (4) by means of the respective chamfering devices (12a, 12b) in operation during movement of the respective tool unit (15a, 15b) along a second processing direction (17) aligned orthogonal to the conveying direction (7) and parallel to the conveying plane (6),
- and the first end region (21) and the second end region (22) of the at least one rod-shaped workpiece (4) is received by the conveying device (5) and positioned at the respective processing device (8, 9) respectively by moving or positioning of the clamping device (10a, 10b) relatively to the machine frame (20a, 20b) along the first processing direction (16).

14. Method according to claim 13, **characterized in that** the respective first end portion (42) and the respective second end portion (43) of two rod-shaped workpieces (4, 23) are cut simultaneously by means of the respective sawing device (11a, 11b).

15. Method according to claim 14, **characterized in that** the first processing device (8) and the second processing device (9) each have two chamfering devices (12a, 12b), which two chamfering devices (12a, 12b) are arranged spaced apart along the conveying direction (7), the respective first end (2) and the respective second end (3) of two rod-shaped workpieces (4, 23) being machined simultaneously by means of the respective two chamfering devices (12a, 12b).

## Revendications

1. Installation (1) pour l'usinage d'une première extrémité (2) et d'une deuxième extrémité (3) d'au moins une pièce en forme de barre (4), comprenant :
- un dispositif d'alimentation (5), dans lequel l'au moins une pièce en forme de barre (4) peut être positionnée dans un plan d'alimentation (6) transversalement à une direction d'alimentation (7) et au moyen duquel dispositif d'alimentation (5) l'au moins une pièce en forme de barre (4) peut être transportée dans la direction d'alimentation (7),
- un premier dispositif d'usinage (8) et un deuxième dispositif d'usinage (9), la première extrémité (2) de l'au moins une pièce en forme de barre (4) pouvant être amenée au premier dispositif d'usinage (8) et la deuxième extrémité (3) de l'au moins une pièce en forme de barre (4) pouvant être amenée au deuxième dispositif d'usinage (9) au moyen du dispositif d'alimentation (5),
- le premier dispositif d'usinage (8) et le deuxième dispositif d'usinage (9) comprenant chacun un dispositif de serrage (10a, 10b), un dispositif de sciage (11a, 11b) et au moins un dispositif de chanfreinage (12a, 12b),
- dans lequel, sur le premier dispositif d'usinage (8) et sur le deuxième dispositif d'usinage (9), le dispositif de sciage (11) et un boîtier de machine (13) de l'au moins un dispositif de chanfreinage (12) sont chacun agencés sur un élément de support commun (14) et sont maintenus en place de manière fixe par rapport à l'élément de support commun (14),
- et dans lequel, sur le premier dispositif d'usinage (8) et sur le deuxième dispositif d'usinage (9), le dispositif de sciage (11), le boîtier de machine (13) avec le au moins un dispositif de chanfreinage (12) et l'élément de support commun (14) forment chacun une première unité d'outils (15a) et une deuxième unité d'outils (15b),
**caractérisé en ce que**
- la première unité d'outils (15a) du premier dispositif d'usinage (8) est déplaçable par rapport à un premier bâti de machine (20a) et la deuxième unité d'outils (15b) du deuxième dispositif d'usinage (9) est déplaçable par rapport à un deuxième bâti de machine (20b) le long d'une première direction d'usinage (16) orientée normalement au plan d'alimentation (6) et le long d'une deuxième direction d'usinage (17) orientée orthogonalement à la direction d'alimentation (7) et parallèlement au plan d'alimentation (6), et
- le dispositif de serrage respectif (10a, 10b) est déplaçable et positionnable par rapport au premier et au deuxième bâti de machine (20a, 20b) du dispositif d'usinage respectif (8, 9) le long de la première direction d'usinage (16), dans lequel une première zone d'extrémité (21) et une deuxième zone d'extrémité (22) de l'au moins une pièce en forme de barre (4) peuvent être reçues ou positionnées dans le dispositif de serrage respectif (10a, 10b) du premier dispositif d'usinage (8) et du deuxième dispositif d'usinage (9).

2. Installation selon la revendication 1, **caractérisée en ce que** le dispositif d'alimentation (5), le premier dispositif d'usinage (8) et le deuxième dispositif d'usinage (9) sont maintenus sur un bâti de base commun (33), dans lequel un axe de rotation d'usinage (32a) de l'au moins un dispositif de chanfreinage (12a) du premier dispositif d'usinage (8) est aligné avec un axe de rotation d'usinage (32b) de l'au moins un dispositif de chanfreinage (12b) du deuxième dispositif d'usinage (9).

3. Installation selon l'une des revendications précédentes, **caractérisée en ce que** le dispositif d'alimentation (5) comprend un premier moyen d'alimentation (18) et un deuxième moyen d'alimentation (19), lequel premier moyen d'alimentation (18) est maintenu sur le premier bâti de machine (20a) du premier dispositif d'usinage (8) et lequel deuxième moyen d'alimentation (19) est maintenu sur le deuxième bâti de machine (20b) du deuxième dispositif d'usinage (9), dans lequel le premier moyen d'alimentation (18) et le deuxième moyen d'alimentation (19) sont couplés en mouvement.

4. Installation selon l'une des revendications précédentes, **caractérisée en ce que** l'unité d'outils respective (15a, 15b) du premier dispositif d'usinage (8) et du deuxième dispositif d'usinage (9) comprend, en plus de l'au moins un dispositif de chanfreinage (12), au moins un deuxième dispositif de chanfreinage (30) avec un deuxième boîtier de machine (31), dans lequel les boîtiers de machine (13, 31) de l'au moins un dispositif de chanfreinage (12) et de l'au moins un deuxième dispositif de chanfreinage (30) sont agencés sur l'élément de support commun (14) espacés l'un de l'autre le long de la direction d'alimentation (7).

5. Installation selon la revendication 4, **caractérisée en ce que** le au moins un dispositif de chanfreinage (12) par rapport à son boîtier de machine (13) et le deuxième dispositif de chanfreinage (30) par rapport à son deuxième boîtier de machine (31) peuvent être déplacés de manière couplée en mouvement et peuvent être positionnés de manière couplée en mouvement dans la direction le long de la deuxième direction d'usinage (17).

6. Installation selon l'une des revendications précédentes, **caractérisée en ce que** au moyen du dispositif de sciage respectif (11a, 11b) du premier dispositif d'usinage (8) et du deuxième dispositif d'usinage (9), la première extrémité (2) et la deuxième extrémité (3) de l'au moins une première pièce en forme de barre (4) et d'une deuxième pièce en forme de barre (23) peuvent être coupées lors d'un mouvement de l'unité d'outils (15) le long de la première direction d'usinage (16).

7. Installation selon l'une des revendications précédentes, **caractérisée en ce que** le dispositif de serrage (10a) du premier dispositif d'usinage (8) et le dispositif de serrage (10b) du deuxième dispositif d'usinage (9) ont chacun une mâchoire de serrage inférieure (24) et une mâchoire de serrage supérieure (25), par rapport au plan d'alimentation (6), dans laquelle, sur la mâchoire de serrage inférieure (24), au moins un logement de pièce en forme de V en coupe transversale (26) est formé pour l'au moins une pièce en forme de barre (4).

8. Installation selon la revendication 7, **caractérisée en ce que** la mâchoire de serrage supérieure (25) dans la zone du logement de pièce en forme de V (26) présente un serrage de pièce en forme de V en coupe transversale (44), dans lequel la géométrie en coupe transversale du logement de pièce en forme de V (26) et du serrage de pièce en forme de V (44) est conçue pour être essentiellement symétrique par rapport au plan d'alimentation (6) ou symétrique par rapport à un plan horizontal.

9. Installation selon la revendication 7 ou 8, **caractérisée en ce que** la mâchoire de serrage supérieure (25) est conçue pour être au moins partiellement complémentaire en forme par rapport à la mâchoire de serrage inférieure (24), dans laquelle la mâchoire de serrage supérieure (25) dans la zone du logement de pièce en forme de V (26) présente une surface de pression (27) de coupe transversale convexe ou en forme de V.

10. Installation selon la revendication 7, 8 ou 9, **caractérisée en ce que** le logement de pièce respectif (26) est conçu pour être symétrique par rapport à un plan de symétrie vertical (28), dans laquelle un dispositif de chanfreinage (12) est assigné à chaque logement de pièce (26) de l'installation (1) et dans laquelle l'axe de rotation d'usinage (32) du dispositif de chanfreinage assigné (12) se trouve dans le plan de symétrie vertical (28) du logement de pièce respectif (26).

11. Installation selon l'une des revendications précédentes, **caractérisée en ce que** le dispositif de serrage (10a) du premier dispositif d'usinage (8) et le dispositif de serrage (10b) du deuxième dispositif d'usinage (9), et en particulier la mâchoire de serrage inférieure respective (24) et la mâchoire de serrage supérieure respective (25), peuvent être déplacés de manière couplée en mouvement et peuvent être positionnés de manière couplée en mouvement par rapport au premier et au deuxième bâti de machine (20a, 20b) dans la direction le long de la première direction d'usinage (16).

12. Installation selon l'une des revendications précédentes, **caractérisée en ce que** le dispositif d'alimentation (5) présente au moins deux organes de transport (35), lesquels au moins deux organes de transport (35) présentent chacun deux ou plus de deux logements de transport en forme de cuvette en coupe transversale (29), dans laquelle les logements de transport en forme de cuvette (29) sont alignés les uns après les autres dans la direction d'alimentation (7) et dans laquelle l'au moins une pièce en forme de barre (4) peut être positionnée de manière librement déplaçable dans respectivement un logement de transport en forme de cuvette (29) de chaque organe de transport (35) dans la direction d'alimentation (7).

13. Procédé d'usinage pour l'usinage simultané d'une première extrémité (2) et d'une deuxième extrémité (3) d'au moins une pièce en forme de barre (4) au moyen d'une installation (1), comprenant
un dispositif d'alimentation (5), un premier dispositif d'usinage (8) et un deuxième dispositif d'usinage (9),
dans lequel le premier dispositif d'usinage (8) et le deuxième dispositif d'usinage (9) ont chacun un dispositif de serrage (10a, 10b) et une unité d'outils (15a, 15b), lesquelles unités d'outils (15a, 15b) ont chacune au moins un dispositif de chanfreinage (12) dans un boîtier de machine (13) et un dispositif de sciage (11),
le procédé d'usinage comprenant les étapes suivantes :
- le positionnement de l'au moins une pièce en forme de barre (4) dans un plan d'alimentation (6) du dispositif d'alimentation (5) transversalement à une direction d'alimentation (7) ;
- l'amenée simultanée de la première extrémité (2) de l'au moins une pièce en forme de barre (4) au premier dispositif d'usinage (8) et de la deuxième extrémité (3) de l'au moins une pièce en forme de barre (4) au deuxième dispositif d'usinage (9) au moyen du dispositif d'alimentation (5) ;
- le positionnement d'une première zone d'extrémité (21) et d'une deuxième zone d'extrémité (22) de l'au moins une pièce en forme de barre (4) dans le dispositif de serrage respectif (10a, 10b) du premier dispositif d'usinage (8) et du deuxième dispositif d'usinage (9) ;
- le maintien des zones d'extrémité respectives (21, 22) de l'au moins une pièce en forme de barre (4) au moyen d'une mâchoire de serrage inférieure (24) et d'une mâchoire de serrage supérieure (25) du dispositif de serrage respectif (10a, 10b) ;
- le tronçonnage d'une première section d'extrémité (42) et d'une deuxième section d'extrémité (43) de l'au moins une pièce en forme de barre (4) au moyen du dispositif de sciage respectif (11a, 11b) du premier dispositif d'usinage (8) et du deuxième dispositif d'usinage (9) ;
- l'usinage par enlèvement de copeaux pour l'application d'au moins un chanfrein (34) sur la première extrémité (2) et sur la deuxième extrémité (3) de l'au moins une pièce en forme de barre (4) au moyen de l'au moins un dispositif de chanfreinage respectif (12a, 12b) du premier dispositif d'usinage (8) et du deuxième dispositif d'usinage (9) ;
- dans lequel le dispositif de sciage (11) et le boîtier de machine (13) de l'au moins un dispositif de chanfreinage (12) sont déplacés en tant qu'unité d'outils (15) couplée en mouvement,
**caractérisé en ce que**
- l'unité d'outils respective (15a, 15b) est déplacée par rapport à un bâti de machine respectif (20a, 20b),
- dans lequel la première section d'extrémité (42) et la deuxième section d'extrémité (43) de l'au moins une pièce en forme de barre (4) sont tronçonnées au moyen des unités de sciage respectives (11a, 11b) en fonctionnement lors du mouvement de l'unité d'outils respective (15a, 15b) le long d'une première direction d'usinage (16) orientée normalement au plan d'alimentation (6),
- et dans lequel le au moins un chanfrein sur la première extrémité (2) et sur la deuxième extrémité (3) de l'au moins une pièce en forme de barre (4) est appliqué au moyen des dispositifs de chanfreinage respectifs (12a, 12b) en fonctionnement lors du mouvement de l'unité d'outils respective (15a, 15b) le long d'une deuxième direction d'usinage (17) orientée orthogonalement à la direction d'alimentation (7) et parallèlement au plan d'alimentation (6),
- et le positionnement et le maintien de la première zone d'extrémité (21) et de la deuxième zone d'extrémité (22) de l'au moins une pièce en forme de barre (4) sont réalisés par le mouvement ou le positionnement du dispositif de serrage (10a, 10b) par rapport au bâti de machine (20a, 20b) le long de la première direction d'usinage (16) depuis le dispositif d'alimentation (5) au dispositif d'usinage respectif (8, 9).

14. Procédé selon la revendication 13, **caractérisé en ce que** la première section d'extrémité respective (42) et la deuxième section d'extrémité respective (43) de deux pièces en forme de barre (4, 23) sont tronçonnées simultanément au moyen du dispositif de sciage respectif (11a, 11b).

15. Procédé selon la revendication 14, **caractérisé en ce que** le premier dispositif d'usinage (8) et le deuxième dispositif d'usinage (9) ont chacun deux dispositifs de chanfreinage (12a, 12b), lesquels deux dispositifs de chanfreinage (12a, 12b) sont agencés espacés le long de la direction d'alimentation (7), dans lequel la première extrémité respective (2) et la deuxième extrémité respective (3) de deux pièces en forme de barre (4, 23) sont usinées par enlèvement de copeaux simultanément au moyen des deux dispositifs de chanfreinage respectifs (12a, 12b).
